(19) Europäisches Patentamt
European Patent Office
Office européen des brevets

(11) **EP 2 123 721 B1**

(12) **EUROPÄISCHE PATENTSCHRIFT**

(45) Veröffentlichungstag und Bekanntmachung des Hinweises auf die Patenterteilung:
**27.11.2013  Patentblatt 2013/48**

(51) Int Cl.:
***C09C 1/00*** (2006.01)

(21) Anmeldenummer: **08007357.0**

(22) Anmeldetag: **15.04.2008**

(54) **Perlglanzpigmente auf Basis von feinen und dünnen Substraten**

Pearlescent pigment based on fine, thin substrates

Pigments nacrés à base de substrats fins et minces

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(43) Veröffentlichungstag der Anmeldung:
**25.11.2009  Patentblatt 2009/48**

(73) Patentinhaber: **Eckart GmbH**
**91235 Hartenstein (DE)**

(72) Erfinder:
• **Steinbach, Katrin**
 **90425 Nürnberg (DE)**
• **Grüner, Michael**
 **91275 Auerbach (DE)**
• **Schmidt, Ulrich**
 **91217 Hersbruck (DE)**
• **Kaupp, Günther**
 **91284 Neuhaus (DE)**
• **Krüger, Peter**
 **89231 Neu-Ulm, Ludwigsfeld (DE)**
• **Depner, Jens**
 **91235 Velden (DE)**
• **Schneider, Ralph**
 **91207 Lauf (DE)**
• **Henglein, Frank**
 **90409 Nürnberg (DE)**

(74) Vertreter: **Louis Pöhlau Lohrentz**
 **Patentanwälte**
 **Postfach 30 55**
 **90014 Nürnberg (DE)**

(56) Entgegenhaltungen:
EP-A- 1 072 651   EP-A- 1 564 261
EP-A- 1 595 921   WO-A-02/090448
WO-A-2007/054379

**Beschreibung**

Die Erfindung betrifft Perlglanzpigmente, deren Verwendung und Herstellung sowie Beschichtungsmittel, die die erfindungsgemäßen Perlglanzpigmente enthalten.

Die WO 2007/054379 A1 beschreibt Perlglanzpigmente auf Basis sehr dünner plättchenförmiger Glassubstrate. Die plättchenförmigen Glassubstrate weisen gemäß den Beispielen der WO 2007/054379 A1 einen größeren Durchmesser von mehr als 20 μm und weniger als 100 μm auf.

Die EP 1 595 921 A1 offenbart polychrome Pigmente.

Die WO 02/090448 A2 beschreibt Effektpigmente, die auf plättchenförmigen Glassubstraten mit einer Dicke von ≤ 1,0 μm und insbesondere mit einer Dicke von 20 bis 400 nm basieren. Die plättchenförmigen Glassubstrate weisen gemäß den Beispielen der WO 02/090448 A2 einen Durchmesser von 10 bis 40 μm auf.

Die EP 1 564 261 A1 offenbart Interferenzpigmente.

In der EP 1 072 651 A1 werden Pigmente auf Basis dünner Flocken mit einer mittleren Partikelgröße von 0,5 - 10 μm beschrieben, die zunächst mit kugelförmigen $SiO_2$-Partikeln und nachfolgend mit ultrafeinen Titandioxidpartikeln beschichtet sind.

Alle großen Hersteller besitzen feine Perlglanzpigmente in ihrem Angebot. Beispiele hierfür sind Phoenix Soft Pigmente (Fa. Eckart GmbH) oder Mearlin Micro (Fa. BASF Catalysts).

Die Firma SunChemical vertreibt unter dem Produktnamen "SpectraFlex® Focus" Perlglanzpigmente auf Basis von $Al_2O_3$-flakes, die mit $TiO_2$ beschichtet sind. Die Pigmente haben Partikelgrößen von 3 - 18 μm.

Die vorgenannten Effektpigmente werden unter anderem auch zur Pigmentierung von Kosmetika verwendet. Nachteiligerweise weisen diese bekannten Effektpigmente keinen ausreichenden Softfokus auf, d.h. vermögen es in einem Kosmetikum nicht, Falten oder Unregelmäßigkeiten der Haut zufriedenstellend abzudecken.

Es besteht mithin ein Bedarf an verbesserten Effektpigmenten. Insbesondere ist es erwünscht, Effektpigmente mit verbessertem Softfokus und angenehmem Hautgefühl bereitzustellen.

Schließlich sollten die Effektpigmente eine gute Deckfähigkeit bei starkem Haze-Effekt sowie gleichzeitig intensiver Interferenzfarbe aufweisen.

Die der Erfindung zugrundliegende Aufgabe wird durch die Bereitstellung von Perlglanzpigmenten gemäß Anspruch 1 gelöst.

Bevorzugte Weiterbildungen der erfindungsgemäßen Perlgalnzpigmente sind in den Unteransprüchen 2 bis 12 angegeben.

Die der Erfindung zugrundeliegende Aufgabe wird auch durch ein Verfahren zur Herstellung der erfindungsgemäßen Perlglanzpigmente gelöst, das folgende Schritte umfaßt:

a) Klassieren des weitgehend transparenten Substrates unter Erhalt eines Substrates mit einer mittleren Höhe $h_S$ von 40 bis unter 100 nm.
b) Beschichten des klassierten Substrates mit einer optisch wirksamen, vorzugsweise hochbrechenden, Schicht unter Erhalt eines Perlglanzpigmentes mit einer mittleren Größe $d_{50}$ von 3 bis 8 μm.

Weiterhin wird die Aufgabe der Erfindung auch durch die Verwendung der erfindungsgemäßen Perlglanzeffektpigmente in Lacken, Druckfarben, Kosmetika, Kunststoffen, Glas, Email, Glasuren oder Keramik.

Die Aufgabe der Erfindung wird ferner durch die Verwendung der erfindungsgemäßen Perlglanzeffektpigmente als Softfokuspigmente gelöst.

Auch wird die der Erfindung zugrundeliegende Aufgabe durch Bereitstellung eines Beschichtungsmittels, insbesondere eines kosmetischen Präparats gelöst, das die erfindungsgemäßen Perlglanzeffektpigmente enthält.

Die mittlere Schichtdicke $h_S$ wird durch ein Verfahren zur Bestimmung der mittleren Schichtdicke $h_S$ eines plättchenförmigen Substrats eines Effektpigmentes umfassend ein plättchenförmiges Substrat mit einer Dichte $\rho_S$ und mindestens einer optisch wirksamen Beschichtung mit einer Dichte $\rho_M$ gemäß der Formel:

$$h_S = \frac{\frac{4d_M^3}{3r_S^2} + \frac{\pi d_M^2}{r_S} + 2 \cdot d_M}{\frac{\rho_S}{\rho_M \cdot (\frac{100}{c_{M,}} - 1)} - \left(\frac{d_M}{r_S}\right)^2 - 2 \cdot \frac{d_M}{r_S}}$$

bestimmt, wobei $d_M$ die ermittelte mittlere Schichtdicke der hochbrechenden Schicht und/oder der semitransparenten Metallbeschichtung,

$r_S$ der ermittelte mittlere Radius des Substrates,

$\rho_S$ die ermittelte Dichte des Substrates und $\rho_M$ die ermittelte Dichte der optisch wirksamen Beschichtung und $c_M$ der ermittelte Gewichtsanteil in % der optisch wirksamen Beschichtung, bezogen auf das Gesamtgewicht von Substrat und optisch wirksamer Beschichtung, ist. Die Bestimmung der mittleren Schichtdicke $h_S$ erfolgt dann durch Berechnen aus den bestimmten Parametern $d_M$, $r_S$, $\rho_S$ und $\rho_M$.

Die Begriffe "Beschichtung" und "Schicht" werden bei der vorliegenden Erfindung austauschbar verwendet.

Die Erfinder haben überraschend festgestellt, dass Perlglanzpigmente auf Basis von weitgehend transparenten plättchenförmigen Substraten einen guten Softfokus und ein gutes Hautgefühl aufweisen, wenn der $d_{50}$-Wert der Größe und die mittlere Höhe $h_S$ jeweils innerhalb des vorstehend angegebenen Wertebereichs liegen.

Die erfindungsgemäßen Perlglanzpigmente weisen mithin ein Substrat mit einem außerordentlich geringen Durchmesser und einer außerordentlich geringen Substratdicke auf. Es hat sich überraschend gezeigt, dass bei Verwendung dieser Substrate zur Herstellung von Perlglanzpigmenten Perlglanzpigmente mit einem guten Softfokus und einem angenehmen Hautgefühl erhalten werden.

Zugleich weisen die erfindungsgemäßen Perlglanzpigmente ungeachtet des geringen Durchmessers starke Interferenzfarben auf, so dass die erfindungsgemäßen Perlglanzpigmente insbesondere zur Farbgebung von Kosmetika geeignet sind.

Ferner hat sich überraschend herausgestellt, dass die erfindungsgemäßen Perlglanzpigmente bei der Verwendung in Kosmetika zuverlässiger an dem Untergrund, beispielsweise Haut, Augenlidern, Haaren, Wimpern, Finger- und/ oder Fußnägeln, haften, obgleich die Kontaktfläche zum Untergrund aufgrund der geringeren Perlglanzpigmentdurchmessers geringer ist.

Im Hinblick auf dieses überraschende Ergebnis bei der Haftung am Untergrund wird nunmehr vermutet, dass bei größeren Effektpigmenten diese nicht vollflächig an dem Untergrund anliegen und mithin Abschnitte dieser größeren Effektpigmente über den Untergrund "überstehen" und bei Einwirkung von mechanischen Kräften, beispielsweise bei einem Lidschlag oder Muskelbewegungen, oder unter dem Einfluß von Flüssigkeiten, beispielsweise Wasser oder Körpersekreten, wie zum Beispiel Schweiß, größere Effektpigmente leichter vom Untergrund abgelöst werden. Insbesondere eine reifere bzw. ältere Haut weist stärkere Unregelmäßigkeiten auf, an die sich die erfindungsgemäßen Perlglanzeffektpigmente vermutlich vollflächig oder mit einem größeren relativen Flächenanteil anhaften können, als es größere Effektpigmente vermutlich vermögen.

Bei Haaren oder Wimpern, die üblicherweise eine Dicke im Bereich von 40 $\mu$m bis 120 $\mu$m aufweisen, liegen die erfindungsgemäßen Perlglanzpigmente auch unter Berücksichtigung der Krümmung der Haare, vermutlich weitgehend vollflächig an den Haaren bzw. Wimpern an: Die erfindungsgemäßen Perlglanzpigmente haben somit überraschenderweise einen sehr guten Halt an Haaren und Wimpern, so dass diese nicht beim Kämmen oder beim Verwirbeln von Haaren, beispielsweise im Wind, abfallen. Ein Abfallen der Perlglanzpigmente wäre äußerst nachteilig, da zum einen die Haare oder Wimpern nicht mehr die gewünschte einheitliche Farbgebung aufweisen und zum anderen der optische Eindruck von Haarschuppen entsteht, beispielsweise durch Ablagerung der abgefallenen Perlglanzpigmente im Schulterbereich eines Kleides oder Anzugs.

Unter einer optisch wirksamen Beschichtung werden erfindungsgemäß beispielsweise semitransparente Metallschichten verstanden. Die Schichtdicke der semitransparenten Metallschichten liegt üblicherweise in einem Bereich von 5 bis 30 nm, vorzugsweise von 10 bis 25 nm. Auch haben sich Schichtdicken aus einem Bereich von 20 bis 25 nm als sehr geeignet erwiesen.

Ferner werden unter einer optisch wirksamen Beschichtung erfindungsgemäß Metalloxidschichten verstanden, vorzugsweise hochbrechender Metalloxidschichten. Der Brechungsindex von hochbrechenden Metalloxidschichten liegt vorzugsweise oberhalb von 1,8, weiter bevorzugt oberhalb von 2,0. Als sehr geeignet haben sich auch Brechungsindices von mehr als 2,2 oder mehr als 2,6 erwiesen. Vorzugsweise liegt die Schichtdicke der hochbrechenden Metalloxidschicht in einem Bereich zwischen 10 und 300 nm, weiter bevorzugt zwischen 20 und 200 nm, noch weiter bevorzugt zwischen 50 und 150 nm. Anstelle hochbrechender Metalloxide können auch andere hochbrechende Materialien, beispielsweise Metallsulfide, Metallselenide oder Metalinitride verwendet werden, wobei die Schichtdicken vorzugsweise die für die hochbrechenden Metalloxide angegebenen Bereiche aufweisen.

Gemäß einer sehr bevorzugten Ausführungsform der Erfindung ist die optisch wirksame Beschichtung eine (Zahl: 1) hochbrechender Metalloxidschicht.

Selbstverständlich kann auch mehr als eine hochbrechende Metalloxidschicht auf dem Substrat aufgebracht sein. Vorzugsweise werden bei dieser Variante zwischen zwei hochbrechenden Metalloxidschichten wenigstens eine niedrigbrechende Schicht angeordnet, die vorzugsweise einen Brechungsindex von kleiner als 1,8, weiter bevorzugt von kleiner als 1,6 aufweist.

Als niedrigbrechende Schichten werden vorzugsweise Schichten aus Siliciumoxid, vorzugsweise $SiO_2$, Aluminiumoxid, vorzugsweise $Al_2O_3$, AlOOH, Boroxid, $MgF_2$ oder Mischungen davon verwendet.

Als niedrigbrechende Schicht werden vorzugsweise niedrigbrechende Metalloxidschichten, insbesondere Siliciumoxid und/oder Aluminiumoxid, verwendet,

Das Substrat weist eine mittlere Größe $d_{50}$ von 3 bis 8 $\mu$m, bevorzugt von 3,1 bis 7 $\mu$m, weiter bevorzugt von 3,2 bis 6,0 $\mu$m und besonders bevorzugt von 3,3 bis unter 5,0 $\mu$m auf.

Oberhalb einer mittlere Größe $d_{50}$ von 8 $\mu$m sind die vorteilhaften Eigenschaften der erfindungsgemäßen Perlglanzpigmente nicht mehr erkennbar.

Wenn die mittlere Größe unter 3 $\mu$m liegt, so ist die Schichtdicke der Substrate sehr klein. In diesem Fall kann die zur Erreichung eines Interferenzeffektes notwendige Beschichtung mit einem hochbrechendem Material und/oder einer semitransparenten Metallschicht kaum noch in einem wirtschaftlich vertretbaren Aufwand durchgeführt werden.

Unter der mittleren Größe $d_{50}$ wird im Rahmen dieser Erfindung der $d_{50}$-Wert der Summendurchgangskurve der Volumen-gemittelten Größenverteilungsfunktion, wie sie durch Laserbeugungsmethoden erhalten werden, verstanden. Bevorzugt wird hierbei die Größenverteilungskurve mit einem Gerät der Firma Cilas (Gerät: Cilas 1064) bestimmt. Der $d_{50}$-Wert gibt an, dass 50 % der Substrate einen Durchmesser aufweisen, der gleich oder kleiner als der angebenen Wert, beispielsweise 6 $\mu$m, ist.

Weiterhin weist das Substrat der erfindungsgemäßen Perlglanzpigmente vorzugsweise eine mittlere Höhe (Schichtdicke) $h_S$ von 40 bis unter 100 nm, bevorzugt von 40 bis 95 nm, weiter bevorzugt von 45 bis 94 nm und besonders bevorzugt von 50 bis 90 nm auf.

Unterhalb von 40 nm Schichtdicke sind die Pigmente mechanisch zu zerbrechlich und die Beschichtungszeiten mit Metall oder hochbrechendem Metalloxid dauern aufgrund der extrem hohen spezifischen Oberfläche zu lange, um wirtschaftlich vertretbar zu sein. Unter der spezifischen Oberfläche wird die Oberfläche pro Gewichtseinheit verstanden. Da die Schichtdicke der Substrate der erfindungsgemäßen Perlglanzpigmente äußerst gering ist, weisen diese Substrate pro Gewichtseinheit eine sehr große Oberfläche im Vergleich zu herkömmlichen Substraten auf.

Ab einer Schichtdicke von 100 nm sind die Vorteile der Erfindung kaum noch vorhanden.

Die Standardabweichung bei der Höhe $h_S$ liegt vorzugsweise in einem Bereich von 25 bis 80 %, weiter bevorzugt von 30 bis 60 %.

Gemäß einer bevorzugten Variante der Erfindung weisen die Perlglanzpigmente eine Größenverteilung mit einem $d_{90}$-Wert von 7,0 bis 11,0 $\mu$m, weiter bevorzugt von 7,5 $\mu$m bis 10,5 $\mu$m, auf.

Bei den erfindungsgemäßen Perlglanzpigmenten handelt es sich mithin um eine neue Klasse an Perlglanzpigmenten in Form von äußerst feinen Perlglanzpigmenten, die auf einem weitgehend transparenten Substrat mit einer sehr geringen mittleren Größe und einer sehr geringen mittleren Schichtdicke basieren. Derartige Pigmente weisen aufgrund des hohen Anteils an Kanten, relativ zur Fläche, einen ungewöhnlich hohen Streulichtanteil auf. Dies führt beispielsweise in Lackapplikationen zu einem hohen Haze-Effekt. Überraschenderweise weisen die erfindungsgemäßen Perlglanzpigmente dennoch eine intensive Interferenzfarbe auf, obwohl die Interferenzfarbe durch Streueffekte üblicherweise verhindert bzw. stark abgeschwächt wird.

Die erfindungsgemäßen Perlglanzpigmente weisen mindestens eine optisch wirksame Beschichtung, vorzugsweise in Form einer hochbrechenden Beschichtung, bevorzugt hochbrechenden Metalloxidschicht, und/oder einer semitransparenten Metallbeschichtung mit einer Dichte $\rho_M$ auf. Unter der Dichte $\rho_M$ wird die Dichte der optisch wirksamen Beschichtung verstanden. So steht $\rho_M$ im Falle einer Metalloxidschicht für die Dichte der Metalloxidschicht und im Falle einer semitransparenten Metallschicht für die Dichte der semitransparenten Metallschicht.

Im Rahmen dieser Erfindung werden auch Pigmente basierend auf weitgehend transparenten Substraten und einer semitransparenten Metallschicht als Perlglanzpigmente bezeichnet. Vorzugsweise weisen die erfindungsgemäßen Perlglanzpigmente einen Interferenzeffekt auf.

Als weitgehend transparente plättchenförmige Substrate werden Substrate aus natürlichem Glimmer, synthetischem Glimmer, $SiO_2$-Plättchen, $Al_2O_3$-Plättchen oder Mischungen davon ausgewählt. Äußerst bevorzugt sind natürlicher Glimmer und/oder synthetischer Glimmer.

Bei einer bevorzugten Ausführungsform weisen die erfindungsgemäßen Perlglanzpigmente mindestens eine hochbrechende Beschichtung auf. Die hochbrechende Beschichtung hat bevorzugt einen Brechungsindex $n_M > 2,0$ und besonders bevorzugt einen Brechungsindex $n_M > 2,2$.

Besonders bevorzugt ist, dass die hochbrechende Beschichtung eine Metalloxidschicht und/oder eine Metallhydroxidschicht und/oder eine Metalloxidhydratschicht aufweist oder ist.

Als hochbrechende Schichten werden bevorzugt hochbrechende Metalloxide, Metallhydroxide und/oder Metalloxidhydrate verwendet. Als Metalloxide werden bevorzugt Metalloxide der Gruppe bestehend aus Titanoxid, Eisenoxid, Ceroxid, Chromoxid, Zinnoxid, Zirkoniumoxid, Kobaltoxid und Mischungen davon.verwendet. Anstelle der oder zusätzlich zu den vorstehend angebenen Oxide können selbstverständlich auch die entsprechenden Metallhydroxide und/oder Metalloxidhydrate verwendet werden.

Das Titanoxid kann dabei aus der Gruppe, die aus Rutil, Anatas und Pseudobrookit, besteht, ausgewählt werden. Vorzugsweise liegt das Titanoxid als $TiO_2$ in der Rutilmodifikation vor.

Das Eisenoxid wird vorzugsweise aus der Gruppe, die aus Hämatit, Goethit und/oder Magnetit besteht ausgewählt. Vorzugsweise liegt das Eisenoxid als $Fe_2O_3$ (Hämatit) und/oder $Fe_3O_4$ (Magnetit) vor.

Besonders bevorzugt sind $TiO_2$ und $Fe_2O_3$ sowie Mischungen und Kombinationen hiervon. In Mischungen dieser Oxide liegt das $TiO_2$ in einer Preudobrookitmodifikation vor.

$TiO_2$ beschichtete Pigmenten ermöglichen die Bereitstellung von silbernen Farbtönen. Diese Pigmente sind für den sogenannten "immediate whitening-Effekt" äußerst interessant. Hierunter versteht man kosmetische Hautformulierungen, die der Haut ein weißeres Aussehen verleihen. Bislangwerden meist $TiO_2$-Pigmente verwendet, um diesen "immediate whitening-Effekt" zu erzielen. Nachteiligerweise wirken die herkömmlichen $TiO_2$-Pigmente wie Schminke. Die erfindungsgemäßen Pigmente ermöglichen aufgrund der Kombination von vorhandenem Glanz und der besonderen Feinteiligkeit einen natürlicheren Effekt.

Im Fall von Eisenoxiden als hochbrechende Beschichtung sind die erfindungsgemäßen Perlglanzpigmente insbesondere in Haarformulierungen vorteilhaft einsetzbar sind. Derartige Pigmente unterstützen die natürliche Haarfarbe und wirken aufgrund ihrer Feinheit dennoch nicht als "Schuppen". Dies gilt in diesem Fall insbesondere für dunkle Haare, vorzugsweise brünette Haare. Auch blonde Haare können durch kosmetische Haarmittel, die "goldene" oder "beige" erfindungsgemäße Perlglanzpigmente enthalten, in ihrer Farbgebung unterstützt oder verstärkt werden. Weiterhin können blau oder grün gefärbte Haare durch entsprechend gefärbte Perlglanzpigmente in ihrer Farbgebung unterstützt werden.

Als optisch wirksame Beschichtung oder Schicht, können anstelle oder zusätzlich zu der einen oder mehreren hochbrechenden Metalloxidschicht(en) auch eine oder mehrere semitransparente Metallschichten aufgebracht werden. Zur Erzeugung der semitransparenten Metallschichten werden vorzugsweise ein oder mehrere Metalle, die aus der Gruppe, die aus Silber, Gold, Aluminium, Eisen, Magnesium, Chrom, Kupfer, Zink, Zinn, Mangan, Kobalt, Titan, Tantal, Molybdän und Mischungen sowie Legierungen davon bestehen, ausgewählt, aufgebracht.

Gemäß einer bevorzugten Variante der Erfindung weisen die Perlglanzpigmente Metalloxidschicht aus $TiO_2$ und ein Substrat aus Glimmer auf. Bei dem Glimmer kann es sich um synthetischen oder natürlichen Glimmer handeln.

Des weiteren besteht vorzugsweise folgender Zusammenhang zwischen dem $TiO_2$-Gehalt in Gew.-%, bezogen auf das Gesamtgewicht von $TiO_2$ und Glimmer, und der mittleren Schichtdicke der $TiO_2$-Beschichtung:

ein $TiO_2$-Gehalt von 47,5 - 62 Gew.-% bei einer mittleren $TiO_2$-Schichtdicke von über 20 bis 30 nm;
ein $TiO_2$-Gehalt von 58 - 74 Gew.-% bei einer mittleren $TiO_2$-Schichtdicke von über 35 bis 45 nm;
ein $TiO_2$-Gehalt von 63 - 78 Gew.-% bei einer mittleren $TiO_2$-Schichtdicke von über 45 bis 55 nm;
ein $TiO_2$-Gehalt von 67 - 82 Gew.-% bei einer mittleren $TiO_2$-Schichtdicke von über 55 bis 65 nm;
ein $TiO_2$-Gehalt von 70 - 85 Gew.-% bei einer mittleren $TiO_2$-Schichtdicke von über 65 bis 75 nm;
ein $TiO_2$-Gehalt von 73,5 - 86,5 Gew.-% bei einer mittleren $TiO_2$-Schichtdicke von über 75 bis 85 nm;
ein $TiO_2$-Gehalt von 75 - 88 Gew.-% bei einer mittleren $TiO_2$-Schichtdicke von über 85 bis 95 nm;
ein $TiO_2$-Gehalt von 76,5 - 89 Gew.-% bei einer mittleren $TiO_2$-Schichtdicke von über 95 bis 105 nm;
ein $TiO_2$-Gehalt von 78,5 - 90 Gew.-% bei einer mittleren $TiO_2$-Schichtdicke von über 105 bis 115 nm;
ein $TiO_2$-Gehalt von 80 - 91 Gew.-% bei einer mittleren $TiO_2$-Schichtdicke von über 115 bis 125 nm;
ein $TiO_2$-Gehalt von 81,5 - 92 Gew.-% bei einer mittleren $TiO_2$-Schichtdicke von über 125 bis 135 nm;
ein $TiO_2$-Gehalt von 83 - 92,5 Gew.-% bei einer mittleren $TiO_2$-Schichtdicke von über 135 bis 145 nm;
ein $TiO_2$-Gehalt von 84 - 93 Gew.-% bei einer mittleren $TiO_2$-Schichtdicke von über 145 bis 155 nm;
ein $TiO_2$-Gehalt von 85 - 93 Gew.-% bei einer mittleren $TiO_2$-Schichtdicke von über 155 bis 165 nm;
ein $TiO_2$-Gehalt von 86 - 93,5 Gew.-% bei einer mittleren $TiO_2$-Schichtdicke von über 165 bis 175 nm;
ein $TiO_2$-Gehalt von 87 - 94 Gew.-% bei einer mittleren $TiO_2$-Schichtdicke von über 175 bis 185 nm;
ein $TiO_2$-Gehalt von 87,5 - 94 Gew.-% bei einer mittleren $TiO_2$-Schichtdicke von über 185 bis 195 nm;
ein $TiO_2$-Gehalt von 88 - 94,5 Gew.-% bei einer mittleren $TiO_2$-Schichtdicke von über 195 bis 205 nm;
ein $TiO_2$-Gehalt von 89 - 95 Gew.-% bei einer mittleren $TiO_2$-Schichtdicke von über 205 bis 215 nm.

Bei einer weiter bevorzugten Ausführungsform besteht vorzugsweise folgender Zusammenhang zwischen dem $TiO_2$-Gehalt in Gew.-%, bezogen auf das Gesamtgewicht von $TiO_2$ und Glimmer, und der mittleren Schichtdicke der $TiO_2$-Beschichtung:

ein $TiO_2$-Gehalt von 50,5 - 62 Gew.-% bei einer mittleren $TiO_2$-Schichtdicke von über 20 bis 30 nm;
ein $TiO_2$-Gehalt von 61 - 74 Gew.-% bei einer mittleren $TiO_2$-Schichtdicke von über 35 bis 45 nm;
ein $TiO_2$-Gehalt von 65,5 - 78 Gew.-% bei einer mittleren $TiO_2$-Schichtdicke von über 45 bis 55 nm;
ein $TiO_2$-Gehalt von 69,5 - 82 Gew.-% bei einer mittleren $TiO_2$-Schichtdicke von über 55 bis 65 nm;
ein $TiO_2$-Gehalt von 72,5 - 85 Gew.-% bei einer mittleren $TiO_2$-Schichtdicke von über 65 bis 75 nm;
ein $TiO_2$-Gehalt von 75 - 86,5 Gew.-% bei einer mittleren $TiO_2$-Schichtdicke von über 75 bis 85 nm;
ein $TiO_2$-Gehalt von 77,5 - 88 Gew.-% bei einer mittleren $TiO_2$-Schichtdicke von über 85 bis 95 nm;
ein $TiO_2$-Gehalt von 79 - 89 Gew.-% bei einer mittleren $TiO_2$-Schichtdicke von über 95 bis 105 nm;
ein $TiO_2$-Gehalt von 80,5 - 90 Gew.-% bei einer mittleren $TiO_2$-Schichtdicke von über 105 bis 115 nm;

ein $TiO_2$-Gehalt von 82 - 91 Gew.-% bei einer mittleren $TiO_2$-Schichtdicke von über 115 bis 125 nm;

ein $TiO_2$-Gehalt von 83 = 92 Gew.-% bei einer mittleren $TiO_2$-Schichtdicke von über 125 bis 135 nm;

ein $TiO_2$-Gehalt von 84,5 - 92,5 Gew.-% bei einer mittleren $TiO_2$-Schichtdicke von über 135 bis 145 nm;

ein $TiO_2$-Gehalt von 85,5 - 93 Gew.-% bei einer mittleren $TiO_2$-Schichtdicke von über 145 bis 155 nm;

ein $TiO_2$-Gehalt von 86,5 - 93 Gew.-% bei einer mittleren $TiO_2$-Schichtdicke von über 155 bis 165 nm;

ein $TiO_2$-Gehalt von 87 - 93,5 Gew.-% bei einer mittleren $TiO_2$-Schichtdicke von über 165 bis 175 nm;

ein $TiO_2$-Gehalt von 88 - 94 Gew.-% bei einer mittleren $TiO_2$-Schichtdicke von über 175 bis 185 nm;

ein $TiO_2$-Gehalt von 88,5 - 94 Gew.-% bei einer mittleren $TiO_2$-Schichtdicke von über 185 bis 195 nm;

ein $TiO_2$-Gehalt von 89 - 94,5 Gew.-% bei einer mittleren $TiO_2$-Schichtdicke von über 195 bis 205 nm;

ein $TiO_2$-Gehalt von 89,5 - 95 Gew.-% bei einer mittleren $TiO_2$-Schichtdicke von über 205 bis 215 nm.

Die Erfinder haben überraschend festgestellt, dass Perlglanzpigmente, bei denen der Anteil an $TiO_2$ und die Schichtdicke pro Glimmersubstrat, die vorstehenden Beziehungen erfüllen, einen hervorragenden Softfokus haben und sich außerordentlich gut zur Verwendung in Kosmetika eignen. Diese Perlglanzeffektpigmente zeichnen sich strukturell durch einen sehr hohen $TiO_2$-Gehalt pro Perlglanzpigment aus. Im Vergleich zu herkömmlichen Perlglanzpigmenten ist mithin der Anteil an $TiO_2$, bezogen auf das Glimmersubstrat, signifikant erhöht.

Daher eignen sich die erfindungsgemäßen, mit $TiO_2$ beschichteten Perlglanzpigmente auch hervorragend als UV-Absorber. $TiO_2$-Schichten sind bekanntlich stark UV-reflektierend, und daher werden Perlglanzpigmente u.a. auch als UV-Absorber eingesetzt. Die erfindungsgemäßen Perlglanzpigmente sind aufgrund des hohen $TiO_2$-Gehaltes (bei einer bestimmten Schichtdicke an $TiO_2$) besonders gut als UV-Absorber geeignet. Weiterhin bewirkt möglicherweise der hohe Kantenanteil der feinen Pigmente eine hohe UV-Absorption.

Gemäß einer bevorzugten Weiterbildung der Erfindung weisen die Perlglanzpigmente auf der optisch wirksamen Schicht, vorzugsweise hochbrechenden, Schicht mindestens eine weitere Schutzschicht auf.

Die mindestens eine weitere Schutzschicht kann dabei mindestens eine Metalloxidschicht, deren Metalloxide aus der Gruppe, die aus $SiO_2$, $Al_2O_3$, Cer-oxid und Mischungen davon und Kombinationen davon, besteht, ausgewählt werden. Als Schutzschicht kann auch eine Kunststoffbeschichtung, beispielsweise Polyacrylatschicht, aufgebracht werden.

Besonders bevorzugt sind hierbei Schutzschichten aus $SiO_2$ oder aus Cer-oxid in Kombination mit $SiO_2$, wie sie in den EP 1727864 A1 und EP 1682622 A1 beschrieben sind.

Das erfindungsgemäße Verfahren zur Herstellung der erfindungsgemäßen Perlglanzpigmente umfasst folgende Schritte:

a) Klassieren des weitgehend transparenten Substrates unter Erhalt eines Substrates mit einer mittleren Höhe $h_S$ von 40 bis unter 100 nm.

b) Beschichten des klassierten Substrates mit einer optisch wirksamen, vorzugsweise hochbrechenden Schicht unter Erhalt eines Perlglanzpigmentes mit einer mittleren Größe $d_{50}$ von 3 bis 8 $\mu$m.

Das Klassieren des weitgehend transparenten, vorzugsweise transparenten, Substrates kann dabei mittels verschiedener Methoden wie Sedimentation im Schwerefeld, Sedimentation im Dekanter, Sieben, Verwendung eines Zyklons oder Hydrozyklons, Spiralklassifikation oder einer Kombination von zwei oder mehreren dieser Methoden erfolgen. Dabei kann eine Methode wie z.B. Sieben auch in mehreren aufeinanderfolgenden Schritten verwendet werden.

Vorzugsweise werden die erfindungsgemäßen Perlglanzpigmente in Beschichtungsmitteln, die vorzugsweise aus der Gruppe, die aus Lacken, Druckfarben, Kosmetika, Kunststoffen, Glas, Email und Keramik besteht, ausgewählt werden, verwendet.

Vorzugsweise ist das erfindungsgemäße Beschichtungsmittel ein Kosmetikum, das aus der Gruppe, die aus Abdeckstiften, Körperpuder, Gesichtspuder, gepresstem und losem Puder, Gesichtsmakeup, Pudercreme, Crememakeup, Emulsionsmakeup, Wachsmakeup, Foundation, Moussemakeup, Wangenrouge, Augenmakeup wie Lidschatten, Mascara, Eyelinern, flüssigen Eyelinern, Augenbrauenstiften, Lippenpflegestiften, Lippenstiften, Lip Gloss, Lip Linern, Haarstylingkompositionen wie Haarspray, Haarfestiger, Haarmousse, Haargel, Haarwachs, Haarmascara, permanenten und semi-permanenten Haarfarben, temporären Haarfarben, Hautpflegekompositionen wie Lotions, Gele, Emulsionen sowie Nagellackkompositionen besteht, ausgewählt wird.

Vorzugsweise werden die erfindungsgemäßen Perlglanzpigmente als Softfokus Pigment verwendet, insbesondere in Kosmetika.

Das erfindungsgemäße Beschichtungsmittel ist vorzugsweise ein kosmetisches Präparat, enthaltend eines der erfindungsgemäßen Perlglanzpigmente. Bei dem erfindungsgemäßen kosmetischen Präparat kann es sich dabei um die obenstehend genannten Kosmetika handeln.

Die Bestimmung der mittleren Schichtdicken und deren Verteilung bzw. Standardabweichung eines Substrates kann - wie im Stand der Technik bekannt - mit Hilfe von REM-Messungen erfolgen. Dazu werden die Perlglanzpigmente in einen Lack einbracht, beispielsweise durch Spritzung oder Rakelabzug auf einen Untergrund, beispielsweise Blech oder Pappe, aufgebracht und ausgehärtet. Anschließend wird ein Querschliff am ausgehärteten Lack durchgeführt und dieser Querschliff wird im REM untersucht und die Teilchen werden vermessen. Um statistisch gesicherte Werte zu erhalten, sollten mindestens 100 Pigmentteilchen gezählt werden. Im Rahmen dieser Erfindung erfolgt die Bestimmung der Schichtdicke des Substrates und der optisch wirksamen Schicht, beispielsweise einer Metalloxidbeschichtung oder einer semitransparenten Metallschicht, nicht durch diese Methode.

Bei dieser Methode ist darauf zu achten, dass die Perlglanzpigmente weitgehend planparallel orientiert sind. Hierunter versteht man, dass etwa 90 % der Perlglanzpigmente nicht mehr als $\pm$ 15 °und bevorzugt nicht mehr als $\pm$ 10 ° von der mittleren Orientierung abweichen.

Bei einer schlechten Orientierung der Perlglanzpigmente im Lackfilm erhält man einen signifikanten Meßfehler. Dieser ist einerseits dadurch bedingt, dass die Perlglanzpigmente im Querschliff um einen azimuthalen Winkel $\alpha$ zum Beobachter gekippt sind. Anderseits erhält man aufgrund des umgebenden Bindemittelmediums keine Tiefenschärfe der Abbildung, so dass dieser Winkel nicht abschätzbar ist. Mithin "sieht" man ein Bild der Schichtdicke, das um den Faktor $1/\cos\alpha$ vergrößert ist. Dieser Faktor verursacht bei größeren Winkeln einen signifikanten Fehler. In Abhängigkeit von der Größe des Winkels $\alpha$ können die mit dieser Methode bestimmten Schichtdicken daher zu hoch sein.

Daher wird im Rahmen dieser Erfindung die mittlere Substratschichtdicke $h_S$ gemäß dem erfindungsgemäßen Verfahren bestimmt, um zu exakteren Ergebnissen zu kommen. Bei dem erfindungsgemäßen Verfahren wird die mittlere Substratdicke aus dem Zusammenhang zwischen Metalloxidgehalt und der Schichtdicke des Metalloxides bestimmt. Feinere und, wie im folgenden gezeigt wird, vor allem dünnere Substrate besitzen höhere spezifische Oberflächen. Wenn diese dünneren Substrate mit einem Material beschichtet werden, so müssen sie, damit die Beschichtung eine bestimmte Schichtdicke erreicht, mit mehr Material als dickere Substrate (pro Gewichtseinheit) beschichtet werden. Dies äußert sich in einem höheren spezifischen Gehalt des Beschichtungsmaterials am Gesamtperlglanzpigment, d.h. einem höheren Gehalt an Beschichtungsmaterial, bezogen auf das Gewicht an eingesetztem Substrat.

Dem erfindungsgemäßen Verfahren liegt folgendes Modell zugrunde:

a) die Pigmente bestehen aus Zylindern (Plättchen) mit einem einheitlichen Radius $r_S$ und einer einheitlichen Höhe $h_S$ an. Es wird folglich von vornherein mit "Mittelwerten" gerechnet.

b) Die Wahrscheinlichkeit, dass sich die Beschichtungsmoleküle auf dem Substrat abscheiden, ist überall gleich hoch. Mithin besteht kein Unterschied beispielsweise zwischen Rand oder Deckfläche der Plättchenschichtdicke. Als Folge dieser Annahme bildet sich überall eine einheitliche Schichtdicke $d_M$ der Beschichtung aus. Der Index M steht hier für optische wirksame Beschichtung, vorzugsweise Metalloxid und/oder Metall. Die einheitliche Beschichtungsdicke wird bei REM-Untersuchungen an vielen beschichteten plättchenförmigen Effektpigmenten tatsächlich beobachtet.

c) Nebenfällungen von M werden vernachlässigt, d.h. alles Material von M wird als Beschichtung auf dem Substrat aufgebracht.

Der Gehalt an der Beschichtung M wird folgendermaßen definiert:

$$c_M = 100 * \frac{m_M}{m_M + m_S} \qquad \text{(Gl. 1)}$$

Dabei ist $m_M$ die Masse der Beschichtung und $m_S$ die Masse des Substrates. Diese lassen sich auch über die Dichten und Volumina ausdrücken:

$$c_M = 100 * \frac{\rho_M \cdot V_M}{\rho_M \cdot V_M + \rho_S \cdot V_S} \qquad \text{(Gl. 2)}$$

Hierbei sind $\rho_S$ und $\rho_M$ die Dichten des Substrates und der Beschichtung. Für das Volumen des Substrates gilt folgende einfache Beziehung (Zylindervolumen):

$$V_S = \pi \, r_S{}^2 \, h_S \qquad \text{(Gl. 3)}$$

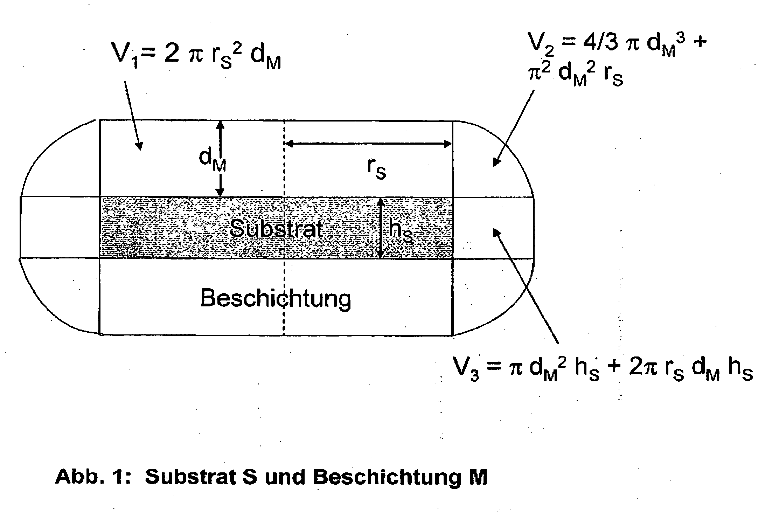

Die Berechnung des Volumens des Beschichtungsmaterials $V_M$ erfolgt nach einem Modell, welches in Abb. 1 skizziert ist.

Das Volumen des abgeschiedenen Metalloxides teilt sich dabei prinzipiell zwischen den Stirnflächen und dem Rand auf und wird in drei Termen dargestellt (s. Abb. 1)

$$V_M = (V_{M,1} + V_{M,2} + V_{M,3}) \qquad \text{(Gl. 4)}$$

$$V_M = \left[ 2\pi \cdot d_M (r_S)^2 + (\frac{4}{3}\pi \cdot d_M^3 + \pi^2 d_M r_S^2) + (\pi \cdot d_M h_S + 2\pi \cdot r_S \cdot d_M) \right] \qquad \text{(Gl. 5)}$$

Hierbei ist $h_S$ die mittlere Höhe des Substrates, $r_S$ der mittlere Durchmesser des Substrates und $d_M$ die Höhe der Schichtdicke des Metalloxides.

Kombiniert man diese Gleichungen, so erhält man schließlich folgenden Ausdruck:

$$c_M = \cfrac{100}{1 + \cfrac{\rho_S}{\rho_M} * \cfrac{h_S \cdot r_S^2}{\left(\frac{4}{3}d_M^3 + (\pi \cdot r_S + h_S) \cdot d_M^2 + (2r_S^2 + 2r_S h_S) \cdot d_M \right)}} \qquad \text{(Gl. 6)}$$

Löst man diese Gleichung wiederum nach der mittleren Substratdicke $h_S$ auf, so erhält man den folgenden Ausdruck:

$$h_S = \cfrac{\dfrac{4d_M^3}{3r_S^2} + \dfrac{\pi d_M^2}{r_S} + 2 \cdot d_M}{\dfrac{\rho_S}{\rho_M \cdot (\frac{100}{c_M} - 1)} - \left(\dfrac{d_M}{r_S}\right)^2 - 2 \cdot \dfrac{d_M}{r_S}} \qquad \text{(Gl. 7)}$$

Im Rahmen dieser Erfindung wird die mittlere Substratdicke $h_S$ bevorzugt über diese Gleichung definiert, wenn die Schichtdicke $d_M$ 40 bis 180 nm ist.

Bei höheren Schichtdicken ist die Formel ungenau, da aufgrund des hohen Gehaltes an dem optisch aktiven Beschichtungsmaterial der Gehalt $c_M$ einem Grenzwert zuläuft. Bei niedrigen Schichtdicken ist ebenfalls keine gute Differenzierung möglich.

Der mittlere Radius des Substrates wird dabei bevorzugt über Laserbeugungsmessungen an den Perlglanzpigmenten bestimmt, vorzugsweise durch Lasergranulometrie mittels Cilas 1064 der Fa. Cilas. Dabei wird der $d_{50}$-Wert der Größensummenverteilungskurve herangezogen; es gilt dann die Beziehung:

$$d_{50}/2 = r_S \qquad \text{(Gl. 8)}$$

Die Größe $c_M$ wird durch analytische Messungen bestimmt. Hierbei wird bevorzugt eine RFA-Analyse (Röntgenfluoreszenzanalyse) anhand von fein verteiltem Pigmentmaterial durchgeführt. Das Pigmentpulver wird ggf. zuvor in einer Mühle oder einem Mörser zerkleinert, um ein einheitliches Probenmaterial bereitzustellen. Alternativ kann das Perlglanzpigment auch beispielsweise durch Flußsäure aufgelöst werden und die RFA-Analyse anschließend aus der Lösung vorgenommen werden.

Weiterhin können die analytischen Gehalte an Substrat und optisch aktivem Material auch über ICP bestimmt werden.

Für die Dichten werden bevorzugt Literaturwerte (Handbook Chemistry and Physics) verwendet. Übliche Werte sind beispielsweise:

**Tab. 1: Dichten üblicher Materialien von Perlglanzpigmenten**

| Material | Dichte | Funktion |
|---|---|---|
| Glimmer | 2,7 | Substrat |
| $Al_2O_3$ | 4,0 | Substrat (überwiegend) |
| $SiO_2$ | 2,2 - 2,7 | Substrat (überwiegend) |
| $TiO_2$ (Rutil) | 4,3 | Beschichtung |
| $TiO_2$ (Anatas) | 3,9 | Beschichtung |
| $Fe_2O_3$ (Hämatit) | 5,2 | Beschichtung |
| $Fe_3O_4$ (Magnetit) | 5,2 | Beschichtung |

Werden Mischschichten aus zwei oder mehrerer hochbrechenden Schichten verwendet, so kann man die Dichte der Beschichtung aus den Literaturwerten gewichtet mit den analytisch zugänglichen Gewichtsverhältnissen der einzelnen Materialien berechnen.

Die Schichtdicke des Metalloxides schließlich kann beispielsweise und bevorzugt über die Farbe des Perlglanzpigmentes bestimmt werden. Die grundlegenden physikalischen Formeln der Optik von Perlglanzpigmenten sind in C. Schmidt, M. Fritz "Optical Physics of Synthetic Interference Pigments" Kontakte (Darmstadt) 1992 (2) S. 15- 24 dargelegt worden.

Hierbei kann die Farbe auch durch ein geeignetes Rechenprogramm wie die Software "Filmstar" der Fa. FTG Software Associates, USA bestimmt werden. Dabei müssen die optischen Konstanten (Brechzahl n und ggf. Absorptionskonstante k) der optisch wirksamen Schicht im Bereich der optischen Wellenlängen (400 bis 800 nm) verwendet werden. Derartige Werte sind für die gängigen Materialien gut bekannt.

Weiterhin kann die Schichtdicke anhand der Farbe aus den öffentlich zugänglichen Informationen bestimmt werden. Beispielsweise gibt es bei mit $TiO_2$ beschichteten Perlglanzpigmenten auf Basis von Glimmer folgenden bekannten Zusammenhang:

Tab. 2: Typische Farben und Schichtdicken von Perlglanzpigmenten

| | Belegung/ Schichtdicke | Farbe |
|---|---|---|
| Silberweiße Perlglanzpigmente | $TiO_2$: 40 - 60 nm | silber |
| Interferenzpigmente | $TiO_2$: 60 - 80 nm | gelb |
| | $TiO_2$: 80 -100 nm | rot |
| | $TiO_2$: 100 - 140 nm | blau |
| | $TiO_2$: 120 - 160 nm | grün |
| | $TiO_2$: 280 - 320 nm | Grün (III. Ordnung) |
| Farbglanzpigmente | $Fe_2O_3$: 35 - 45 nm | bronze |
| | $Fe_2O_3$: 45 - 55 nm | kupfer |
| | $Fe_2O_3$: 55 - 65 nm | rot |
| | $Fe_2O_3$: 65 - 75 nm | rotviolett |
| | $Fe_2O_3$: 75 - 85 nm | rotgrün |

In den meisten Fällen wird die Farbe fast ausschließlich durch die Schichtdicke der hochbrechenden Beschichtung bestimmt (F. Hofmeister, Farbe + Lack **95**, 557 (1989)). Insbesondere bei Perlglanzpigmenten mit einer großen Standardabweichung der Substratdickenverteilung hängt die Farbgebung weitgehend nicht von der mittleren Dicke des Substrates, sondern ist weitgehend durch die Schichtdicke der hochbrechenden Schicht bestimmt.

Erfindungsgemäß weist das Perlglanzpigment eine Standardabweichung der Substrathöhe $h_{S}$ von 25 bis 80 % und besonders bevorzugt von 28 bis 50 % auf.

Sollte das Substrat mit seiner Schichtdicke ebenfalls in nicht vernachlässigbarer Weise die Interferenzfarbe bestimmen, so muß eine genauere optische Rechnung herangezogen werden. Dabei lässt sich die Schichtdicke des Substrates wie auch der optisch aktiven Schicht, vorzugsweise der hochbrechenden Metalloxidschicht, z.B. anhand der Lagen der Maxima und/oder Minima des Remissionsspektrums der Perlglanzpigmente bestimmen.

Sollte das Perlglanzpigment einer Mischbeschichtung von zwei oder mehreren hochbrechenden Oxide aufweisen, so sind die optischen Konstanten analog zur Dichteberechnung aus einer Gewichtung aus den analytisch zugänglichen Gewichtsverhältnissen der einzelnen hochbrechenden Oxide zu berechnen.

Weist das Perlglanzpigment dagegen eine Kombination zweier hochbrechender Oxide auf, so lässt sich das Modell dennoch verwenden. Bei der ersten Beschichtung mit hochbrechendem Metalloxid kann Gl. 7 direkt verwendet werden. Bei der Berechnung des zweiten hochbrechenden Oxides ist jedoch die Schichtdicke des ersten Oxides zu berücksichtigen.

Weiterhin kann die Schichtdicke der optischen wirksamen Schicht, bevorzugt der hochbrechenden Metalloxidschicht, auch durch die REM-Auszählung an gut orientierten Querschliffen der Perlglanzpigmente bestimmt werden.

Ein weitere Methode zur Bestimmung der mittleren Substratschichtdicke besteht darin, die Dicken der (beschichteten) Perlglanzpigmente gemäß der in der WO 2004/087816 A2 beschrieben Methode zu präparieren und ebenfalls im REM zu vermessen. Dabei sollten mindestens 100 Pigmentteilchen vermessen werden, um eine aussagefähige Statistik zu erhalten. Anschließend ermittelt man den arithmetischen Mittelwert. Dieser stellt die mittlere Dicke des Perlglanzpigmentes $d_{tot}$ dar und es gilt natürlicherweise:

$$d_{tot} = 2\,d_M + h_S \qquad\qquad (Gl.\ 9)$$

Man kann ausgehend von Gleichung (7) mittels Gleichung 9 $d_M$ eliminieren und dann nach $h_S$ auflösen. Dabei kann man in guter Näherung die höheren Terme von $h_S$ vernachlässigen und so $h_S$ aus dem Zusammenhang des Gehaltes der optisch aktiven Schicht $c_M$ und der mittleren Pigmentgesamtschichtdicke $d_{tot}$ ermitteln.

Die auf Gl. 7 basierenden Verfahren zur Bestimmung der mittleren Substratschichtdicke kann auch allgemein auf plättchenförmige Effektpigmente verwendet werden. Diese besitzen ein plättchenförmiges Substrat sowie eine Beschichtung. Das plättchenförmige Substrat umfasst dabei auch Metallpigmente.

Das transparente plättchenförmige Substrat der erfindungsgemäßen Perlglanzpigmente wird aus der Gruppe, bestehend aus Glimmer, synthetischem Glimmer, $SiO_2$-Plättchen, $Al_2O_3$-Plättchen und deren Gemische, ausgewählt.

Hierbei ist das Substrat bevorzugt Glimmer.

Natürlich vorkommender Glimmer hat bekanntermaßen eine teilweise stufige Oberfläche. Die durch bei entsprechenden Perlglanzpigmenten auftretenden farblichen Uneinheitlichkeiten sind im Rahmen dieser Erfindung durchaus gewünscht, da sie die Streueffekte verstärken.

Bei weiteren erfindungsgemäßen Ausführungsformen weisen die Perlglanzpigmente mindestens eine weitere niedrigbrechende Schicht auf. Diese Schicht kann zwischen Substrat und hochbrechender Schicht oder auf der hochbrechenden Schicht angebracht sein. Im Fall von Glimmer oder synthetischem Glimmer lässt sich eine derartige Schicht analytisch gut unterscheiden von dieser niedrigbrechenden Schicht. Glimmer weist als natürliches Mineral charakteristische Verunreinigungen auf, wenngleich sein Hauptbestandteil Silikat ist. Anhand dieser Verunreinigungen kann man beispielsweise eine $SiO_2$-Beschichtung vom Glimmer unterscheiden und Gl.7 entsprechend anwenden. Der Schichtaufbau ist auch beispielsweise anhand von Querschliffen und/oder durch ESCA in Verbindung mit Sputterprofilen analysierbar.

Die nachfolgenden Beispiele erläutern die Erfindung, ohne sie jedoch zu beschränken.

**Beispiele 1 a-d:** ($TiO_2$-beschichteter Glimmer)

**Beispiel 1α:**

1 kg Kaliglimmer Mica MD 2800 der Fa. Minelco Specialities Ltd. England wurden 1 h bei 700°C kalziniert, anschließend mit 1000 mL VE-Wasser versetzt und dann in einem Laborkoller der Fa. American Cyanamid Company ca. 1 h delaminiert.
Der Kuchen wurde anschließend mit VE-Wasser auf 35% Feststoffgehalt gebracht und über ein Laborsieb des Typs Separator der Fa. Sweco < 25μm gesiebt.
Die so erhaltene feine Micafraktion wurde dann in einem Labordissolver der Fa. Pendraulik des Typs TD 200 5h behandelt. Hierbei ist darauf zu achten, dass durch Kühlung die Temperatur der Suspension 80°C nicht übersteigt.
Die Micasuspension wurde dann mit VE-Wasser auf 3% Feststoffgehalt verdünnt und über ein Sedimentationsgefäß 5 h absedimentiert. Der Überstand wurde abgesaugt, und der Bodensatz erneut mit Wasser aufgenommen, kräftig aufgerührt und erneut 5 h absedimentiert. Dieser Vorgang wurde insgesamt 4 mal wiederholt, bis nahezu kein Überstand mehr zu erkennen war.
Das Sedimentationsgefäß besaß eine zylindrische Form mit den Maßen:
d= 50cm; h= 50cm.

# EP 2 123 721 B1

Der aus den Überständen stammende Mica wurde in einem großen Behältnis gesammelt und durch Zugabe von NaCl zum Absetzen gebracht. Nach ca. 48h wurde die überstehende klare Salzlösung abgesaugt und der erhaltene Filterkuchen als AGM (Ausgangsmaterial) für weitere Beschichtungen verwendet. Der Kaliglimmer nach Beispiel $1\alpha$ wird im folgenden auch als Kaliglimmer $1\alpha$ bezeichnet.

Auf diese Weise erhält man einen äußerst feinen Glimmer mit einem $d_{50} = 3,8$ $\mu$m (Cilas 1064) der volumengemittelten Teilchengrößenverteilung sowie einer mittleren Dicke $h_{REM} = 82$ nm (s. Tab. 3).

**Beispiel 1a (Interferenz blau 1.Ordnung):**

100g plättchenförmiger Kaliglimmer nach Beispiel $1\alpha$ wurden in VE-Wasser suspendiert. Durch Zudosieren von verdünnter Salzsäure wurde ein pH-Wert von 2,2 eingestellt und die Suspension auf 80°C erhitzt. Dann wurden 50ml einer Sn-Chloridlösung mit c(Sn)=24g/L innerhalb 90 min zudosiert. Durch gleichzeitiges Einleiten einer 15%igen Erdalkalilauge wurde der pH-Wert konstant bei 2,2 gehalten. Nach etwa 1/4h Unterbrechung, während dieser weiter gerührt wurde, stellte man den pH-Wert der Lösung durch Zudosieren von verdünnter Salzsäure auf 1,8 ein. Anschließend begann man mit der Zugabe von 1,85L einer Lösung von 150g $TiCl_4$ und 50g HCl pro Liter. Durch gleichzeitiges Einleiten einer 15%igen Erdalkalilauge wurde der pH-Wert konstant gehalten.

Am Ende der Zugabe erhielt man einen durchaus kräftigen bisher nicht gekannten hellblauen Perlglanz. Die Suspension wurde nach 1 h nachrühren abgekühlt, über einen Büchner Trichter gesaugt und mit VE-Wasser nahezu ionenfrei gewaschen. Zuletzt wurde das Pigment 20 Minuten lang bei 750°C kalziniert.

**Beispiel 1b (Interferenz silber):**

100g plättchenförmiger Kaliglimmer nach Beispiel $1\alpha$ wurden in VE-Wasser suspendiert. Durch Zudosieren von verdünnter Salzsäure wurde ein pH-Wert von 2,2 eingestellt und die Suspension auf 80°C erhitzt. Dann wurden 50ml einer Sn-Chloridlösung mit c(Sn)=24g/L innerhalb 90 min zudosiert. Durch gleichzeitiges Einleiten einer 15%igen Erdalkalilauge wurde der pH-Wert konstant bei 2,2 gehalten. Nach etwa 1/4h Unterbrechung, während dieser weiter gerührt wurde, stellte man den pH-Wert der Lösung durch Zudosieren von verdünnter Salzsäure auf 1,8 ein. Anschließend begann man mit der Zugabe von 2,4L einer Lösung von 150g $TiCl_4$ und 50g HCl pro Liter. Durch gleichzeitiges Einleiten einer 15%igen Erdalkalilauge wurde der pH-Wert konstant gehalten.

Am Ende der Zugabe erhielt man einen kräftigen, silbrigen Perlglanz. Die Suspension wurde nach 1 h nachrühren abgekühlt, über einen Büchner Trichter gesaugt und mit VE-Wasser nahezu ionenfrei gewaschen.

Zuletzt wurde das Pigment 20 Minuten lang bei 800°C kalziniert.

**Beispiel 1c (Interferenz gold):**

100g plättchenförmiger Kaliglimmer nach Beispiel $1\alpha$ wurden in VE-Wasser suspendiert. Durch Zudosieren von verdünnter Salzsäure wurde ein pH-Wert von 2,2 eingestellt und die Suspension auf 80°C erhitzt. Dann wurden 50ml einer Sn-Chloridlösung mit c(Sn)=24g/L innerhalb 90 min zudosiert. Durch gleichzeitiges Einleiten einer 15%igen Erdalkalilauge wurde der pH-Wert konstant bei 2,2 gehalten. Nach etwa 1/4h Unterbrechung, während dieser weiter gerührt wurde, stellte man den pH-Wert der Lösung durch Zudosieren von verdünnter Salzsäure auf 1,8 ein. Anschließend begann man mit der Zugabe von 3,2 L einer Lösung von 150g $TiCl_4$ und 50g HCl pro Liter. Durch gleichzeitiges Einleiten einer 15%igen Erdalkalilauge wurde der pH-Wert konstant gehalten.

Am Ende der Zugabe erhielt man einen durchaus kräftigen bisher nicht gekannten hellblauen Perlglanz. Die Suspension wurde nach 1 h nachrühren abgekühlt, über einen Büchner Trichter gesaugt und mit VE-Wasser nahezu ionenfrei gewaschen. Zuletzt wurde das Pigment 20 Minuten lang bei 750°C kalziniert.

**Beispiel 1d (Interferenz rot):**

100g plättchenförmiger Kaliglimmer nach Beispiel $1\alpha$ wurden in VE-Wasser suspendiert. Durch Zudosieren von verdünnter Salzsäure wurde ein pH-Wert von 2,2 eingestellt und die Suspension auf 80°C erhitzt. Dann wurden 50ml einer Sn-Chloridlösung mit c(Sn)=24g/L innerhalb 90 min zudosiert. Durch gleichzeitiges Einleiten einer 15%igen Erdalkalilauge wird der pH-Wert konstant bei 2,2 gehalten. Nach etwa 1/4h Unterbrechung, während dieser weiter gerührt wurde, stellte man den pH-Wert der Lösung durch Zudosieren von verdünnter Salzsäure auf 1,8 ein. Anschließend begann man mit der Zugabe von 5,6L einer Lösung von 150g $TiCl_4$ und 50g HCl pro Liter. Durch gleichzeitiges Einleiten einer 15%igen Erdalkalilauge wurde der pH-Wert konstant gehalten.

Am Ende der Zugabe erhielt man einen kräftigen, roten Perlglanz. Die Suspension wurde nach 1 h nachrühren abgekühlt, über einen Büchner Trichter gesaugt und mit VE-Wasser nahezu ionenfrei gewaschen.

Zuletzt wurde das Pigment 20 Minuten lang bei 800°C kalziniert.

**Beispiel 1e (Interferenz blau, 2. Ordnung):**

100g plättchenförmiger Kaliglimmer nach Beispiel 1α wurden in VE-Wasser suspendiert. Durch Zudosieren von verdünnter Salzsäure wurde ein pH-Wert von 2,2 eingestellt und die Suspension auf 80°C erhitzt. Dann wurden 50ml einer Sn-Chloridlösung mit c(Sn)=24g/L innerhalb 90 min zudosiert. Durch gleichzeitiges Einleiten einer 15%igen Erdalkalilauge wurde der pH-Wert konstant bei 2,2 gehalten. Nach etwa 1/4h Unterbrechung, während dieser weiter gerührt wurde, stellte man den pH-Wert der Lösung durch Zudosieren von verdünnter Salzsäure auf 1,8 ein. Anschließend begann man mit der Zugabe von 7,2 L einer Lösung von 150g $TiCl_4$ und 50g HCl pro Liter. Durch gleichzeitiges Einleiten einer 15%igen Erdalkalilauge wurde der pH-Wert konstant gehalten.

Am Ende der Zugabe erhielt man einen kräftigen, blauen Perlglanz. Die Suspension wurde nach 1 h nachrühren abgekühlt, über einen Büchner Trichter gesaugt und mit VE-Wasser nahezu ionenfrei gewaschen.
Zuletzt wurde das Pigment 20 Minuten lang bei 800°C kalziniert.

**Vergleichsbeispiel 1 a - e:**

Kommerziell erhältliche $TiO_2$-beschichtete Perlglanzpigmente der Serie Phoenix Soft (Fa. Eckart GmbH). Diese Pigmente basierten auf einem Kaliglimmer , im folgenden als Kaliglimmer 1β bezeichnet, mit einem $d_{50}$-Wert von 6,5 μm und einer mittleren Dicke von 119 nm (s. Tab. 3).

**Vergleichsbeispiel 1a (Interferenz silber):**

Kommerziell erhältliches $TiO_2$-beschichtetes silbernes Perlglanzpigment Prestige Soft Silber (Fa. Eckart GmbH).

**Vergleichsbeispiel 1b (Interferenz gold):**

Kommerziell erhältliches $TiO_2$-beschichtetes silbernes Perlglanzpigment Prestige Soft Gold (Fa. Eckart GmbH).

**Vergleichsbeispiel 1c (Interferenz orange):**

Kommerziell erhältliches $TiO_2$-beschichtetes silbernes Perlglanzpigment Prestige Soft Orange (Fa. Eckart GmbH).

**Vergleichsbeispiel 1d (Interferenz rot):**

Kommerziell erhältliche $TiO_2$-beschichtetes silbernes Perlglanzpigment Prestige Soft Red (Fa. Eckart GmbH).

**Vergleichsbeispiel 1e (Interferenz grün):**

100g plättchenförmiger Kaliglimmer 1β ($d_{50}$: 6,5 μm; Teilchendicke s. Tab. 3) wurden in VE-Wasser suspendiert. Durch Zudosieren von verdünnter Salzsäure wurde ein pH-Wert von 2,2 eingestellt und die Suspension auf 80°C erhitzt. Dann wurden 50ml einer Sn-Chloridlösung mit c(Sn)=24g/L innerhalb 90 min zudosiert. Durch gleichzeitiges Einleiten einer 15%igen Erdalkalilauge wurde der pH-Wert konstant bei 2,2 gehalten. Nach etwa 1/4h Unterbrechung, während dieser weiter gerührt wurde, stellte man den pH-Wert der Lösung durch Zudosieren von verdünnter Salzsäure auf 1,8 ein. Anschließend begann man mit der Zugabe von 4,5 L einer Lösung von 150g $TiCl_4$ und 50g HCl pro Liter. Durch gleichzeitiges Einleiten einer 15%igen Erdalkalilauge wurde der pH-Wert konstant gehalten.

Am Ende der Zugabe erhält man einen sehr starken, roten Perlglanz. Die Suspension wird nach 1 h nachrühren abgekühlt, über einen Büchner Trichter gesaugt und mit VE-Wasser nahezu ionenfrei gewaschen.
Zuletzt wird das Pigment 20 Minuten lang bei 800°C kalziniert.

**Vergleichsbeispiel 2 a - f:**

Kommerziell erhältliche $TiO_2$-beschichtete Perlglanzpigmente der Serie Mearlin Micro (Fa. BASF Catalysts).

**Vergleichsbeispiel 3:**

Kommerziell erhältliche $TiO_2$-beschichtetes silbernes Perlglanzpigment Magna Pearl Silver (Fa. BASF Catalysts).

**Beispiel 2 a - d:** Mit $Fe_2O_3$ beschichteter Glimmer 1$\alpha$ Pigmente

**Beispiel 2a (Bronze):**

100g plättchenförmiger Kaliglimmer nach Beispiel 1$\alpha$ wurden in VE-Wasser suspendiert. Durch Zudosieren von verdünnter Salzsäure wurde ein pH-Wert von 2,9 eingestellt und die Suspension auf 75°C erhitzt. Anschließend wurde mit einer Dosierrate von 150mL/h eine Eisensulfatlösung zugegeben, die 65g $Fe_2(SO_4)_3$ x $9H_2O$ und 1 mL konzentrierte Schwefelsäure je 100mL Lösung enthielt. Durch gleichzeitige Zugabe einer 15%igen Erdalkalilauge wurde der pH-Wert durch Eindosierung auf 3,8 gehalten. Das Eisenhydroxid fiel als bräunlicher Niederschlag aus und lagert sich auf den Pigmentteilchen ab.
Nach Zugabe von 1500 mL $Fe_2(SO_4)_3$ -Lösung wurde die Belegung abgebrochen, 1 h bei Temperatur nachgerührt, abgekühlt, über einen Büchner Trichter gesaugt und mit VE-Wasser nahezu ionenfrei gewaschen.
Das Pigment wurde 20 min bei 780°C kalziniert.
Das so erhaltene Pigment besaß eine Bronzefarbene Farbcharakterisitik mit gutem Glanz bei gleichzeitig hoher Streudichte.

**Beispiel 2b (Fire Red):**

100g plättchenförmiger Kaliglimmer nach Beispiel 1$\alpha$ wurden in VE-Wasser suspendiert. Durch Zudosieren von verdünnter Salzsäure wurde ein pH-Wert von 2,9 eingestellt und die Suspension auf 75°C erhitzt. Anschließend wurde mit einer Dosierrate von 150mUh eine Eisensulfatlösung zugegeben, die 65g $Fe_2(SO_4)_3$ x $9H_2O$ und 1 mL konzentrierte Schwefelsäure je 100mL Lösung enthielt. Durch gleichzeitige Zugabe einer 15%igen Erdalkalilauge wurde der pH-Wert durch Eindosierung auf 3,8 gehalten. Das Eisenhydroxid fiel als bräunlicher Niederschlag aus und lagert sich auf den Pigmentteilchen ab.
Nach Zugabe von 2300 mL $Fe_2(SO_4)_3$ -Lösung wurde die Belegung abgebrochen, 1 h bei Temperatur nachgerührt, abgekühlt, über einen Büchner Trichter gesaugt und mit VE-Wasser nahezu ionenfrei gewaschen.
Das Pigment wurde 20 min bei 780°C kalziniert.
Das so erhaltene Pigment besaß eine feuerrote Farbcharakteristik mit gutem Glanz bei gleichzeitig hoher Lichtstreuung.

**Beispiel 2c (Red-green):**

100g plättchenförmiger Kaliglimmer nach Beispiel 1$\alpha$ wurden in VE-Wasser suspendiert. Durch Zudosieren von verdünnter Salzsäure wurde ein pH-Wert von 2,9 eingestellt und die Suspension auf 75°C erhitzt. Anschließend wurde mit einer Dosierrate von 150mL/h eine Eisensulfatlösung zugegeben, die 65g $Fe_2(SO_4)_3$ x $9H_2O$ und 1 mL konzentrierte Schwefelsäure je 100mL Lösung enthielt. Durch gleichzeitige Zugabe einer 15%igen Erdalkalilauge wurde der pH-Wert durch Eindosierung auf 3,8 gehalten. Das Eisenhydroxid fiel als bräunlicher Niederschlag aus und lagert sich auf den Pigmentteilchen ab.
Nach Zugabe von 2900 mL $Fe_2(SO_4)_3$ -Lösung wurde die Belegung abgebrochen, 1 h bei Temperatur nachgerührt, abgekühlt, über einen Büchner Trichter gesaugt und mit VE-Wasser nahezu ionenfrei gewaschen.
Das Pigment wurde 20 min bei 780°C kalziniert.
Das so erhaltene Pigment besaß eine rot-grüne Farbcharakteristik (je nach Betrachtungswinkel) mit gutem Glanz bei gleichzeitig hoher Lichtstreuung.

**Vergleichsbeispiel 4 a-c:**

Kommerziell erhältliche $Fe_2O_3$-beschichtete Perlglanzpigmente der Serie Phoenix Soft (Fa. Eckart GmbH). Diese Pigmente basierten auf einem Kaliglimmer 1$\beta$ mit einem $d_{50}$-Wert von 6,5 $\mu$m und einer mittleren Dicke von 119 nm (s. Tab. 3).

**Vergleichsbeispiel 4a (Bronze):**

Kommerziell erhältliches $Fe_2O_3$-beschichtetes bronzefarbenes Perlglanzpigment Prestige Soft Bronze (Fa. Eckart GmbH).

**Vergleichsbeispiel 4b (Kupfer):**

Kommerziell erhältliches $Fe_2O_3$-beschichtetes kupferfarbenes Perlglanzpigment Prestige Soft Copper (Fa. Eckart GmbH).

**Vergleichsbeispiel 4c (Feuerrot):**

Kommerziell erhältliches $Fe_2O_3$-beschichtetes feuerrotes Perlglanzpigment Prestige Soft Fire Red (Fa. Eckart GmbH).

**Nicht erfindungsgemäßes Beispiel 3 (Interferenz rot auf Glas):**

100g kommerziell verfügbares ECR-Glas der Fa. Glassflake Ltd. (GF100NM) mit einer durchschnittlichen Dicke von ca. 95 nm und einer Größe $d_{50}$ = 7 μm; wurden in VE-Wasser suspendiert. Durch Zudosieren von verdünnter Salzsäure wurde ein pH-Wert von 2,2 eingestellt und die Suspension auf 80°C erhitzt. Dann wurden 50ml einer Sn-Chloridlösung mit c(Sn)=24g/L innerhalb 90 min zudosiert. Durch gleichzeitiges Einleiten einer 15%igen Erdalkalilauge wurde der pH-Wert konstant bei 2,2 gehalten. Nach etwa 1/4h Unterbrechung, während dieser weiter gerührt wird, stellte man den pH-Wert der Lösung durch Zudosieren von verdünnter Salzsäure auf 1,8 ein. Anschließend begann man mit der Zugabe von 5,6L einer Lösung von 150g $TiCl_4$ und 50g HCl pro Liter. Durch gleichzeitiges Einleiten einer 15%igen Erdalkalilauge wurde der pH-Wert konstant gehalten.
Am Ende der Zugabe erhielt man einen kräftigen, roten Perlglanz. Die Suspension wurde nach 1 h nachrühren abgekühlt, über einen Büchner Trichter gesaugt und mit VE-Wasser nahezu ionenfrei gewaschen.
Zuletzt wurde das Pigment 40 Minuten lang bei 550°C kalziniert.

**Vergleichsbeispiel 5 e-f:**

Kommerziell erhältliche $TiO_2$-beschichtete Perlglanzpigmente der Serie Phoenix Silk (Fa. Eckart GmbH). Diese Pigmente basieren auf einem Glimmer mit einem $d_{50}$-Wert von 10,5 μm und einer mittleren Dicke von ca. 200 nm.

**Vergleichsbeispiel 5e (Interferenz blau):**

Kommerziell erhältliche $TiO_2$-beschichtetes blaues Perlglanzpigment Prestige Silk Blue (Fa. Eckart GmbH).

**Vergleichsbeispiel 5f (Interferenz grün):**

Kommerziell erhältliche $TiO_2$-beschichtetes grünes Perlglanzpigment Prestige Silk green (Fa. Eckart GmbH).

**I Physikalische Charakterisierung**

**Ia Teilchengrößenmessung**

Die Pigmente der erfindungsgemäßen Beispiele und Vergleichsbeispiele sowie die Kaliglimmer 1α und Kaliglimmer 1β wurden mittels Laserbeugungsmethoden charakterisiert (Gerät: Cilas 1064).
Hierzu wurden ca. 50mL der Glimmersuspension ( NFA ca. 35% ) mit 50mL Isopropanol über einem Magnetrührer vermischt und anschließend 300 Sekunden im Ultraschallbad Sonorex IK 52 der Fa Bandelin behandelt. 2-3mL Probensubstanz wurden dann zur Messung in das Gerät pipettiert.
Dabei wurden bei $TiO_2$ beschichteten Pigmenten stets die goldenfarbigen Pigmente herangezogen. Diese Pigmente enthielten relativ wenig $TiO_2$. Ein gewisser Gehalt an $TiO_2$ erhöht die Meßgenauigkeit im Vergleich zur Messung an reinem Glimmer, da aufgrund des höheren Brechungsindexes von $TiO_2$ ein stärkeres Meßsignal erhalten wird.
Die $d_{50}$-Werte der volumengemittelten Summendurchgangsverteilung sind in Tabelle 3 dargestellt (Spalte 8).

**Ib Bestimmung der mittleren Dicke des Substrates**

Die mittlere Substratdicke wurde nach verschiedenen Methoden bestimmt. Die Ergebnisse sind in Tab. 3 aufgeführt.
In einem Fall wurden die Perlglanzpigmente 10%ig in einem 2K Klarlack Autoclear Plus HS der Fa. Sikkens GmbH mit einem Hülsenpinsel eingearbeitet und mit Hilfe einer Spiralrakel (26μm Nassfilmdicke) auf eine Folie appliziert und getrocknet. Nach 24h Abtrocknungszeit wurden von diesen Rakelabzügen Querschliffe angefertigt. Die Querschliffe wurden im REM vermessen. Hierbei wurden pro Probe mindestens 100 Pigmentteilchen vermessen, um eine aussagefähige Statistik zu erhalten.
Dabei wurde neben der Substratschichtdicke auch die Schichtdicke der Metalloxidschicht bestimmt.
Diese Bestimmungen wurden aufgrund des großen Zeitaufwandes nur mit ausgewählten Proben durchgeführt. Die Ergebnisse sind in der letzten Spalte von Tab. 3 aufgeführt.

Zu Vergleichszwecken wurde der in den Beispielen 1 und 2 verwendete Kalilimmer 1$\alpha$ sowie der in den Vergleichsbeispielen 1 und 4 verwendete Kaliglimmer 1$\beta$ untersucht. Hierbei wurden zwei Methoden verwendet:

a) Die Glimmer wurden analog zu den Perlglanzpigmenten in Rakelabzügen aufgetragen und von den ausgehärteten Lacken Querschliffe angefertigt. Mittels REM wurden von den Querschliffen die Dicken verschiedener Glimmerpartikel gezählt (mindestens 100 Teilchen).
Die arithmetischen Mittelwerte und Standardabweichungen sind in Tab. 3 in Spalte 12 dargestellt.

b) Die Glimmer wurden gemäß der in der WO 2004/087816 A2 beschrieben Methode präpariert und ebenfalls im REM vermessen. Die Ergebnisse sind in Tab. 3 in Spalte 11 dargestellt.

Schließlich wurde die mittlere Substrathöhe nach Gl. 7 berechnet. Hierbei wurde für den Substratradius die Hälfte der $d_{50}$-Werte der Volumengemittelten Größenverteilung eingesetzt.

Die Gehalte an $TiO_2$ bzw. an $Fe_2O_3$ sowie an Substratmaterial wurden mittels RFA bestimmt. Hierzu wurde das Perlglanzpigmentpulver direkt aus der Schüttung in ein Probenbehältnis, welches mit einer Spektrolen-Folie 6 $\mu$m überzogen wurde, gegeben und daraus vermessen. Als Messgerät diente das Gerät: Advant-X der Fa. Thermo ARL.

Die Metalloxidgehalte nach Gl. 1 sind in Tab. 3 in Spalte 4 in Gew.-% bezogen auf Metalloxid und Substrat aufgeführt.

Schließlich musste noch die Schichtdicke von $TiO_2$ bzw. $Fe_2O_3$ bestimmt werden. Hier arbeitete man anhand der Farben der Pigmente und der in der Literatur hierzu veröffentlichten üblichen Schichtdicken. Diese Oxidschichtdicken sind in Tab. 3 in Spalte 6 in nm aufgeführt.

Die nach Gl. 7 berechneten Werte sind in Tab. 3 in Spalte 9 in nm aufgeführt.

Zudem ist in Spalte 10 der Tab. 3 der Mittelwert der berechneten mittleren Höhe für alle Proben eines erfindungsgemäßen Beispiels oder Vergleichsbeispiels dargestellt. Zudem ist für die berechneten Werte die Standardabweichung absolut und in % bezogen auf den Mittelwert dargestellt. (Dies ist nicht die Standardabweichung der Dicken innerhalb einer Probe. Diese lässt sich nach Gl. 7 nicht berechnen, da das Modell von vornherein auf Mittelwerten beruht).

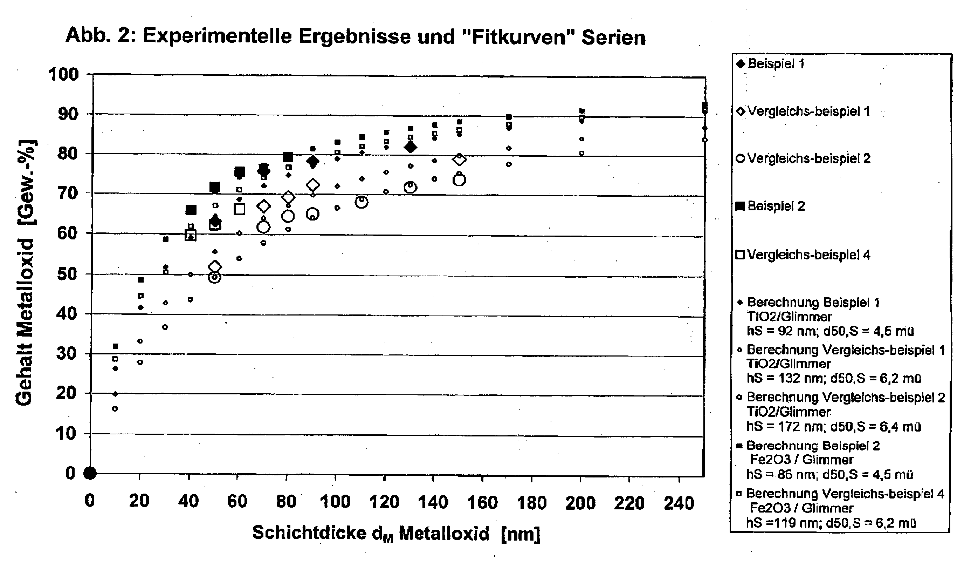

In der Abb. 2 findet sich zudem eine graphische Darstellung des Metalloxidgehaltes gegen die Schichtdicke, die wiederum aus den Farbannahmen stammt.

Weiterhin findet man berechnete Kurven nach Gl. 6, in die die nach Gleichung 7 berechnete mittlere Substratdicke $h_S$ einging.

**Tab 3: Physikalische Charakterisierung Beispiele und Vergleichsbeispiele**

| Probe | Substrat | Metall-oxid | Gehalt Metalloxid (Gl.1) in % | Farbe | Schichtdicke Metalloxid / nm | | $d_{50}$** [μm] (Gerät: Cilas 1064) | hs [nm] | Mittelwert hs /Stand.-abw. absolut (%) innerhalb eines Beispiels | $h_s$ aus REM am Glimmer [nm] | | $h_s$ aus REM am Periglanz im Schliff [nm] |
|---|---|---|---|---|---|---|---|---|---|---|---|---|
| | | | | | aus Farbe* | aus REM | | nach Gl.7 | | Pulver | Schliff | |
| Beispiel 1a | Glimmer gemäß Bsp. 1α | TiO$_2$ | | Blau | | | | | | | | |
| Beispiel 1b | " | TiO$_2$ | 63,2 | Silber . | 50 | 52 | 4,5 | 100 | | | | 119 |
| Beispiel 1c | " | TiO$_2$ | 75,8 | Gold | 70 | | 4,5 | 77 | 92 nm 12 (13%) | 82 | 94 | |
| Beispieil 1d | " | TiO$_2$ | 78,4 | Rot | 90 | 87 | 4,5 | 87 | | | | 115 |
| Beispiel 1e | " | TiO$_2$ | 82,1 | Blau | 130 | | 4,5 | 103 | | | | |
| Vergleichsbeispiel 1a | Glimmer 1β | TiO$_2$ | 52 | Silber | 50 | 38 | 6,2 | 158 | | | | 145 |
| Vergleichsbeispiel 1 b | " | TiO$_2$ | 67 | Gold | 70 | | 6,2 | 118 | | | | |
| Vorgleichsbeispiel 1c | " | TiO$_2$ | 69,3 | Orange | 80 | | 6,2 | 122 | 132 nm 18 (14%) | 118 | 133 | |
| Vergleichsbeispiel 1 d | " | TiO$_2$ | 72,4 | Rot | 90 | 66 | 6,2 | 119 | | | | 155 |
| Vergleichsbeispiel 1 e | " | TiO$_2$ | 79 | Grün | 150 | | 6,2 | 143 | | | | |

EP 2 123 721 B1

(fortgesetzt)

| Probe | Substrat | Metall-oxid | Gehalt Metalloxid (Gl.1) in % | Farbe | Schichtdicke Metalloxid / nm | | d$_{50}$** [μm] (Gerät: Cilas 1064) | hs [nm] | Mittelwert hs /Stand.-abw. absolut (%) innerhalb eines Beispiels | h$_s$ aus REM am Glimmer [nm] | | h$_s$ aus REM am Periglanz im Schliff [nm] |
|---|---|---|---|---|---|---|---|---|---|---|---|---|
| | | | | | aus Farbe* | aus REM | | nach Gl.7 | | Pulver | Schliff | |
| Vergleichs-beispiel 2 a | Glimmer (unbekannt) | TiO$_2$ | 49,3 | Silber | 50 | | 6,4 | 177 | | | | |
| Vergleichs-beispiel 2 b | | TiO$_2$ | 61,8 | Gold | 70 | | 6,4 | 148 | | | | |
| Vergleichs-beispiel 2 c | | TiO$_2$ . | 64,5 | Orange | 80 | | 6,4 | 153 | | | | |
| Vergleichs-beispiel 2 d | | TiO$_2$ | 65,1 | Rot | 90 | | 6,4 | 169 | 172 16 (9 %) | - | -- | |
| Vergleichs-bespiel 2 e | | TiO$_2$ | 68,1 | Violett | 110 | | 6,4 | 183 | | | | |
| Vergleichs-beispiel 2 f | | TiO$_2$ | 71,8 | Blau | 130 | | 6,4 | 183 | | | | |
| Vergleichs-beispiel 29 | | TiO$_2$ | 73,8 | Grün | 150 | | 6,4 | 193 | | | | |
| Vergleichsbeispiel 3 | Glimmer (unbekannt) | TiO$_2$ (Magna Pearl) | 49,3 | Silber | 50 | 34 | 5,2 | 179 | 179 | - | 130 | 129 |

EP 2 123 721 B1

(fortgesetzt)

| Probe | Substrat | Metall-oxid | Gehalt Metalloxid (Gl.1) in % | Farbe | Schichtdicke Metalloxid / nm | | $d_{50}$** [μm] (Gerät: Cilas 1064) | hs [nm] | Mittelwert hs /Stand.-abw. absolut (%) innerhalb eines Beispiels | $h_s$ aus REM am Glimmer [nm] | | $h_s$ aus REM am Periglanz im Schliff [nm] |
|---|---|---|---|---|---|---|---|---|---|---|---|---|
| | | | | | aus Farbe* | aus REM | | nach Gl.7 | | Pulver | Schliff | |
| Beispiel 2 a | Glimmer n. Bsp. 1α | $Fe_2O_3$ | 65,9 | bronze | 40 | | 4.5 | 85 | | | | |
| Beispiel 2 b | | $Fe_2O_3$ | 71,7 | kupfer | 50 | | 4,5 | 81 | | | | |
| Beispiel 2 c | | $Fe_2O_3$ | 76,4 | feuerrot | 60 | | 4,5 | 80 | 86 nm 6 (7 %) | 82 | 94 | |
| Beispiel 2 d | | $Fe_2O_3$ | 75.6 | rotviolet | 70 | | 4,5 | 95 | | | | |
| Beispiel 2 a | | $Fe_2O_3$ | 79.5 | scara-bäus | 80 | | 4,5 | 87 | | | | |
| Vergleichs-beispiel 4 a | Glimmer 1β | $Fe_2O_3$ | 59,7 | bronze | 40 | | 6,2 | 109 | | | | |
| Vergleichs-beispiel 4 b | | $Fe_2O_3$ | 62,4 | kupfer | 50 | | 6,2 | 123 | 119 nm 9 (8%) | 118 | 133 | |
| Vergleichs-beispiel 4 c | | $Fe_2O_3$ | 66,2 | feuerrot | 60 | 57,5 | 6,2 | 126 | | | | 177 |

**Ergebnisse der Schichtdickenbestimmungen:**

Die mittlere Schichtdicke des Substrats $h_S$ ist unabhängig von der Bestimmungsmethode in allen erfindungsgemäßen Beispielen deutlich geringer als bei den Vergleichsbeispielen. In den erfindungsgemäßen Beispielen wurde mithin ein feinerer und dünnerer Glimmer verwendet als in den Vergleichsbeispielen.

Im Detail zeigen sich jedoch gewisse systematische Abweichungen bei den nach verschiedenen Methoden erhaltenen Ergebnissen. Diese seien im folgenden kurz diskutiert:

Bei den nach GI. 7 berechneten Werten zeigen sich innerhalb eines Beispiels oder Vergleichsbeispiels von den Proben gewisse Schwankungen. Diese dürften in erster Linie von den Meßfehlern der Bestimmung des Metalloxidgehaltes, den Annahmen über die Metalloxidschichtdicke (über den Farbton) sowie den Meßfehlern bei der Bestimmung der mittleren Partikelgröße herrühren.

Immer liegt jedoch die mittlere Substratschichtdicke $h_S$ für die erfindungsgemäßen Beispiele (Glimmer $1\alpha$) unterhalb von 110 nm.

Vergleicht man jedoch untereinander die Mittelwerte von $h_S$ innerhalb einer Serie der Beispiele oder Vergleichsbeispiele (Spalte 10) für die erfindungsgemäßen Beispiele 1 und 2 einerseits (92 bzw. 86 nm) und der Vergleichsbeispiele 1 und 4 andererseits (138 bzw. 119 nm), so findet man jeweils eine hervorragende Übereinstimmung. In den Beispielen 1 und 2 wurde der Kalilimmer $1\alpha$ und bei den Vergleichsbeispielen 1 und 4 wurden jeweils der Kalilimmer $1\beta$ verwendet.

Weiterhin findet man hervorragende Übereinstimmungen der über die Oxidgehalte und -schichtdicken nach GI. 7 berechneten Werte mit den mit mittleren Schichtdicken, die nach der Auswertung der senkrecht orientierten Pulver der Glimmer (Spalte 11) bzw. der Glimmer im Rakelabzug gefunden wurden.

Diese Befunde bestätigen die Konsistenz des Modells der GI. 1 - 7 und die Zuverlässigkeit der Ermittlung der mittleren Schichtdicke nach dieser Methode.

Die Bestimmung der mittleren Schichtdicke der Glimmer anhand der Querschliffe (Spalte 12) weist systematisch höhere Werte im Vergleich zur Bestimmung an senkrecht orientierten Pulvern auf. Dies dürfte im wesentlichen auf zwei Faktoren zurückzuführen sein:

Glimmer weist am Rand eine etwas geringere Dicke als in der Mitte auf. Daher dürften die Werte nach der Pulvermethode potentiell etwas zu niedrig sein.

Die Pigmente der Querschliffmethode weisen etwas unterschiedliche Orientierungen der Plättchen innerhalb des Lacks auf. Wie oben ausgeführt führt dies zu scheinbar höheren Werten.

Die Bestimmung der mittleren Schichtdicke $h_S$ anhand der Querschliffe der Perlglanzpigmente (Spalte 12) selbst führt zu potentiell noch höheren Werten (Spalte 12).

Daher wird im Rahmen dieser Erfindung die mittlere Substratschichtdicke nach GI. 7 ermittelt, wenn die Schichtdicken der optisch aktiven Schicht 40 nm bis 180 nm betragen.

In Abb.2 ist der Gehalt an $TiO_2$ bzw. $Fe_2O_3$ für die erfindungsgemäßen Beispiele und Vergleichsbeipiele, die als "Serie" vorliegen aufgetragen. Weiterhin ist die nach GI. (6) mit den Daten aus der Tab. 3 (Mittelwerte der Spalte 10 für die Substrathöhe) berechneten Kurven aufgetragen. Man erkennt einen guten "Fit" der experimentellen Daten mit den berechneten Kurven.

**II Abprüfungen:**

**IIa Winkelabhängige Helligkeitsmessungen**

Zur Charakterisierung des reflektierten Streulichtanteiles wurde das Pigment mit einer Pigmentierungshöhe von 6 Gew.-% (bezogen auf das Gesamtgewichtes des Naßlacks in einen konventionellen Nitrocelluloselack (Dr. Renger Erco Bronzemischlack 2615e; Fa. Morton) eingerührt. Dabei wurde das Effektpigment vorgelegt und anschließend mit einem Pinsel in den Lack dispergiert.)

Der fertige Lack wurde auf einem Rakelabzugsgerät mit einer Nassfilmdicke von 50 μm auf Prüfkarten Nr. 2853 der Fa. Byk Gardner (Kontrastpapier) appliziert.

Mit einem Mehrwinkelfarbmessgerät, M 682 der Firma X-Rite, wurden bei einem konstanten Einfallswinkel von 45° (gemäß Herstellerangaben) bei verschiedenen Beobachtungswinkeln relativ zum Glanzwinkel die L*- und C*-Werte bestimmt. Insbesondere sind die Beobachtungswinkel bei 15°, 25°, 45° und 110° relevant.

Stark reflektierende Proben (Idealfall Spiegel) reflektieren nahezu das gesamte eintreffende Licht im sog. Glanzwinkel. Je weiter man sich bei der Messung also vom Glanzwinkel entfernt, desto weniger Licht und somit Helligkeit (L*) kann gemessen werden. In der Lackindustrie wird dieser Effekt, der bevorzugt bei Metallicpigmenten auftritt als sog. Helligkeitsflop beschrieben.

Anders bei stark streuenden Proben. Hier wird das einfallende Licht im Idealfall gleichmäßig über alle Winkel reflektiert. Somit sollten auch bei Messwinkeln weit entfernt vom Glanzwinkel noch beträchtliche Helligkeitswerte detektierbar sein. Hier ist zur Charakterisierung vor allem der 110°-Winkel geeignet.

**IIb Glanzmessungen:**

Der streuende Charakter der jeweiligen Probe lässt sich zusätzlich durch die Messung des Glanzes charakterisieren. Der Glanz ist ein Maß für die gerichtete reflektion. Stark streuende Proben sollten mithin einen niedrigen Glanz aufweisen.
Es wurden die Nitrolackapplikationen aus IIa mit Hilfe eines Micro-Tri-Gloss Glanzmessgerätes der Fa. Byk Gardner mit einem Messwinkel von 60° (für schwach glänzende Proben ) bei schwarzem Hintergrund vermessen.

**IIc Winkelabhängige Farbmessungen**

Neben der Lichtstreuung ist auch noch ein zusätzlicher Farbeffekt gewünscht, um den Teint der Haut zu verstärken.
Zur Messung des Chromas wurde wie unter IIa beschrieben verfahren und das Chroma nahe dem Glanzwinkel bei 25°in der Tabelle 4 aufgeführt.

**IId Deckung**

Einige Proben der erfindungsgemäßen Pigmente und der Vergleichsbeispiele wurden in verschiedenen Konzenterationen auf Kontrastkartons aufgerakelt und die Deckfähigkeit visuell verglichen. Dabei wurde die Deckfähigkeit anhand folgender Noten beurteilt:

1 = sehr schlecht
2 = schlecht
3 = mittel
4 = gut
5 = sehr gut

Tab. 4: Ergebnisse der optischen Messungen und Deckfähigkeit

| Interferenzfarbe | Probel | Chroma 25° | Deckung (visuel) | L110° | Glanz 60° |
|---|---|---|---|---|---|
| fahlblau | Beispiel 1a | 23,3 | 3 | 25,8 | 7,1 |
| silber | Beispiel 1b | 10,3 | 4 | 38,8 | 9,9 |
| rot | Beispiel 1d | | 4 | | |
| blau | Beispiel 1e | 31,1 | 4 | 37.0 | 6,1 |
| grün | Beispiel 1f | 21,0 | 4 | 38,9 | 7,3 |
| bronze | Beispiel 2a | 33,5 | 5 | 22,6 | 11,6 |
| kupfer | Beispiel 2b | 40,2 | 5 | 18,7 | 9,9 |
| silber | / | 14,3 | 4 | 22,4 | 21,5 |
| silber | Vgl. Beispiel 1a | 9,4 | 2 | 31,9 | |
| rot | Vgl Beispiel 1d | 22,3 | 2 | 28,0 | 11,0 |
| bronze | Vgl. Beispiel 4a | 37,3 | 3 | 16,0 | 17,9 |
| kupfer | Vgl. Beispiel 4b | 40,1 | 3 | 14,6 | 15,1 |
| Silk blau | Vgl. Beispiel 5e | 29,7 | 2 | 21,7 | 17,3 |
| silk grün | Vgl. Beispiel 5f | 16,2 | 2 | 22,5 | 27,3 |
| Magna Pearl | | | | | |
| 3100 (silber) | Vgl. Beispiel 3 | 10.6 | 3 | 31.7 | 11,8 |

# EP 2 123 721 B1

(fortgesetzt)

| Interferenzfarbe | Probel | Chroma 25° | Deckung (visuel) | L110° | Glanz 60° |
|---|---|---|---|---|---|
| Bronze | Vgl. Beispiel 2a | 28,4 | 2 | 16,5 | 16,1 |
| Copper | Vgl Beispiel 2b | 32,9 | 2 | 15.0 | 15,1 |

Die erfindungsgemaßen Perlglanzpigmente weisen eine durchgehend bessere Deckfähigkeit auf als die Vergleichsbeispiele aus dem Stand der Technik. Hierbei sind immer die korrespondierenden Farbtöne zu vergleichen.

Weiterhin zeigen die Pigmente der erfindungsgemäßen Beispiele einen geringeren Glanz als die Vergleichsbeispiele des jeweils korrespondierenden Farbtons. Die gerichtete Reflektion ist hier offenbar geringer. Dies ist für einen Softfokus Effekt durchaus erwünscht.

In gleicher Weise sind die $L_{110°}$-Werte bei den erfindungsgemäßen Beispielen wesentlich höher als bei den korrespondierenden Vergleichsbeispielen. Bei Messungen zeigen, dass das die erfindungsgemäßen Beispiele offenbar einen höheren Streulichtanteil aufweisen.

Dies ist vermutlich auf die geringe Partikelgröße und die geringe Substratschichtdicke zurückzuführen. Die geringe Partikelgröße des Glimmers geht einher mit einem erhöhten Kantenanteil und damit mit mehr Streuung.
Die geringere Substratschichtdicke wiederum führt zu einem wesentlich erhöhten $TiO_2$-Gehalt bei vergleichbarer Schichtdicke. Das hochbrechende $TiO_2$ fällt gewöhnlich nicht in einer perfekten glatten Schicht, sondern weist immer eine gewisse Korngrößenverteilung auf. Diese Oxidkörner verursachen immer eine gewisse Streuung. Es wird vermutet, dass der höheren Streulichtanteil der erfindungsgemäßen Proben auch auf diesen Effekt zurückzuführen ist.

Völlig überraschend ist jedoch, dass das Chroma der farbigen Proben der erfindungsgemäßen Pigmente vergleichbar oder sogar größer ist mit jenem der korrespondierenden Vergleichsbeispiele. Dies ist für den Fachmann nicht zu erwarten, wenn die Pigmente einen stärkeren Streulichtanteil aufweisen. Normalerweise würde man erwarten, dass in diesem Fall das Chroma aufgrund des erhöhten Weißlichtsockels absinken würde.

Mithin weisen die erfindungsgemäßen Perlganzpigmente neue, überraschende optische Eigenschaften auf.

**II e UV-Absorptionsmessungen**

Von einigen Proben wurden UV-Absorptionsmessungen durchgeführt. Es wurden immer die korrespondierenden Proben vergleichbarer Interferenzfarbe verglichen. Die Messung der Absorption der einzelnen Perlglanzpigmente erfolgte über ein UV-Vis -Spektrometer des Typs Genesys 20, Helios ε der Fa. Thermo.
Hierbei wurde das Pigment in eine Glycerin/Wasser-Gemisch (Verhältnis 90:10) mit 0,025 Gew.% über einen Magnetrührer eingerührt und anschließend über eine Quarzküvette mit einer optischen Weglänge von 10mm vermessen.

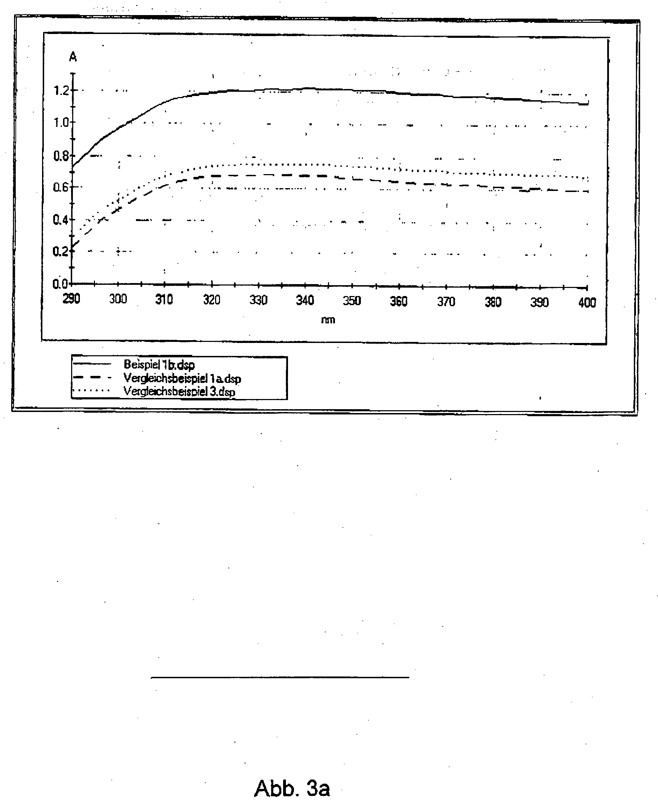

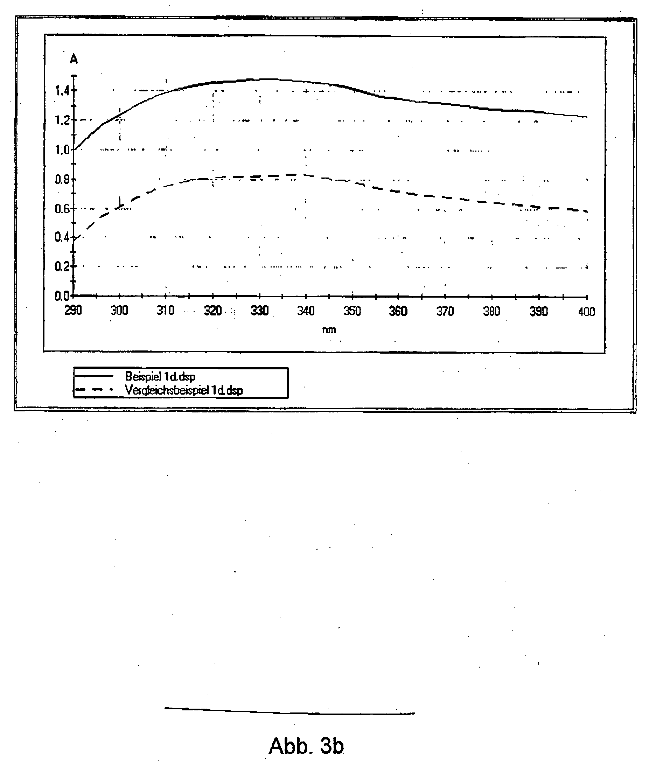

In den Abb. 3a und 3b sind die Absorptionsspektren im Wellenlängenbereich von 290 bis 400 nm dargestellt. Die erfindungsgemäßen Proben (Abb. 3a: Beispiel 1 b bzw. Abb. 3b: Beispiel 1 d) weisen stets eine deutlich höhere Absorption auf, als die jeweils verwendeten Pigmente der angegebenen Vergleichsbeispiele.

**Patentansprüche**

1. Perlglanzpigmente Umfassend ein weitgehend transparentes plättchenförmijes Substrat mit einer Dichte $P_S$ und mindestens einer optisch wirksamen Beschichtung mit einer Dichte $P_M$
**dadurch gekennzeichnet;**
**dass** das transparente plättchenförmige Substrat aus der Gruppe, bestehend aus Glimmer, synthetischem Glimmer, $SiO_2$-Plättchen, $Al_2O_3$-Plättchen und deren Gemische, ausgewählt ist und das Substrat eine mittlere Größe $d_{50}$ von 3 bis 8 $\mu$m und eine mittlere Höhe hs von 40 bis 110 nm aufweist, wobei die Standardabweichung der Höhe $h_S$ 25 bis 80 % beträgt.

2. Perlglanzpigmente nach Anspruch 1,
**dadurch gekennzeichnet;**
**dass** die mittlere Höhe $h_S$ 40 nm bis unter 100 nm ist.

3. Perlglanzpigmente nach einem der vorstehenden Ansprüche,
**dadurch gekennzeichnet;**
**dass** die Perlglanzpigmente eine Größenverteilung mit einem $d_{90}$-Wert von 7,0 bis 11,0 $\mu$m aufweisen.

4. Perlglanzpigmente nach einem der vorstehenden Ansprüche,

**dadurch gekennzeichnet;**
**dass** die optisch wirksame Beschichtung eine hochbrechende Beschichtung, vorzugsweise mit einen Brechungsindex $n_M > 2,0$, ist.

5. Perlglanzpigmente nach einem der vorstehenden Ansprüche,
**dadurch gekennzeichnet;**
**dass** die optisch wirksame Schicht eine Metalloxidschicht und/oder eine Metallhydroxidschicht und/oder eine Metalloxidhydratschicht aufweist oder ist.

6. Perlglanzpigmente nach Anspruch 5,
**dadurch gekennzeichnet;**
**dass** die Metalloxidschicht Metalloxide, die aus der Gruppe, bestehend aus Titanoxid, Eisenoxid, Ceroxid, Chromoxid, Zinnoxid, Zirkoniumoxid, Kobaltoxid und Mischungen davon , ausgewählt werden, enthält oder daraus besteht.

7. Perlglanzpigmente nach Anspruch 5 oder 6,
**dadurch gekennzeichnet;**
**dass** die Schichtdicke der Metalloxidschicht zwischen 10 und 300 nm liegt.

8. Perlglanzpigmente nach einem der Ansprüche 6 oder 7,
**dadurch gekennzeichnet;**
**dass** die Metalloxidschicht aus $TiO_2$, vorzugsweise weitgehend in der Rutilmodifikation, und das Substrat aus Glimmer besteht und vorzugsweise folgender Zusammenhang zwischen dem $TiO_2$-Gehalt in Gew.-%, bezogen auf das Gesamtgewicht von $TiO_2$ und Glimmer, und der mittleren Schichtdicke der $TiO_2$-Beschichtung besteht:

ein $TiO_2$-Gehalt von 47,5 - 62 Gew.-% bei einer mittleren $TiO_2$-Schichtdicke von über 20 bis 30 nm;
ein $TiO_2$-Gehalt von 58 - 74 Gew.-% bei einer mittleren $TiO_2$-Schichtdicke von über 35 bis 45 nm;
ein $TiO_2$-Gehalt von 63 - 78 Gew.-% bei einer mittleren $TiO_2$-Schichtdicke von über 45 bis 55 nm;
ein $TiO_2$-Gehalt von 67 - 82 Gew.-% bei einer mittleren $TiO_2$-Schichtdicke von über 55 bis 65 nm;
ein $TiO_2$-Gehalt von-70 - 85 Gew.-% bei einer mittleren $TiO_2$-Schichtdicke von über 65 bis 75 nm;
ein $TiO_2$-Gehalt von 73,5 - 86,5 Gew.-% bei einer mittleren $TiO_2$-Schichtdicke von über 75 bis 85 nm;
ein $TiO_2$-Gehalt von 75 - 88 Gew.-% bei einer mittleren $TiO_2$-Schichtdicke von über 85 bis 95 nm;
ein $TiO_2$-Gehalt von 76,5 - 89 Gew.-% bei einer mittleren $TiO_2$-Schichtdicke von über 95 bis 105 nm;
ein $TiO_2$-Gehalt von 78,5 - 90 Gew.-% bei einer mittleren $TiO_2$-Schichtdicke von über 105 bis 115 nm;
ein $TiO_2$-Gehalt von 80 - 91 Gew.-% bei einer mittleren $TiO_2$-Schichtdicke von über 115 bis 125 nm;
ein $TiO_2$-Gehalt von 81,5 - 92 Gew.-% bei einer mittleren $TiO_2$-Schichtdicke von über 125 bis 135 nm;
ein $TiO_2$-Gehalt von 83 - 92,5 Gew.-% bei einer mittleren $TiO_2$-Schichtdicke von über 135 bis 145 nm;
ein $TiO_2$-Gehalt von 84 - 93 Gew.-% bei einer mittleren $TiO_2$-Schichtdicke von über 145 bis 155 nm;
ein $TiO_2$-Gehalt von 85 - 93 Gew.-% bei einer mittleren $TiO_2$-Schichtdicke von über 155 bis 165 nm;
ein $TiO_2$-Gehalt von 86 - 93,5 Gew.-% bei einer mittleren $TiO_2$-Schichtdicke von über 165 bis 175 nm;
ein $TiO_2$-Gehalt von 87 - 94 Gew.-% bei einer mittleren $TiO_2$-Schichtdicke von . über 175 bis 185 nm;
ein $TiO_2$-Gehalt von 87,5 - 94 Gew.-% bei einer mittleren $TiO_2$-Schichtdicke von über 185 bis 195 nm;
ein $TiO_2$-Gehalt von 88 - 94,5 Gew.-% bei einer mittleren $TiO_2$-Schichtdicke von über 195 bis 205 nm;
ein $TiO_2$-Gehalt von 89 - 95 Gew.-% bei einer mittleren $TiO_2$-Schichtdicke von über 205 bis 215 nm.

9. Perlglanzpigmente nach einem der Ansprüche 6 oder 8,
**dadurch gekennzeichnet;**
**dass** die Metalloxidschicht aus $TiO_2$, vorzugsweise weitgehend in der Rutilmodifikation, und das Substrat aus Glimmer besteht und vorzugsweise folgender Zusammenhang zwischen dem $TiO_2$-Gehalt in Gew.-%, bezogen auf das Gesamtgewicht von $TiO_2$ und Glimmer, und der mittleren Schichtdicke der $TiO_2$-Beschichtung besteht:

ein $TiO_2$-Gehalt von 50,5 - 62 Gew.-% bei einer mittleren $TiO_2$-Schichtdicke von über 20 bis 30 nm;
ein $TiO_2$-Gehalt von 61 - 74 Gew.-% bei einer mittleren $TiO_2$-Schichtdicke von über 35 bis 45 nm;
ein $TiO_2$-Gehalt von 65,5 - 78 Gew.-% bei einer mittleren $TiO_2$-Schichtdicke von über 45 bis 55 nm;
ein $TiO_2$-Gehalt von 69,5 - 82 Gew.-% bei einer mittleren $TiO_2$-Schichtdicke von über 55 bis 65 nm;
ein $TiO_2$-Gehalt von 72,5 - 85 Gew.-% bei einer mittleren $TiO_2$-Schichtdicke von über 65 bis 75 nm;
ein $TiO_2$-Gehalt von 75 - 86,5 Gew.-% bei einer mittleren $TiO_2$-Schichtdicke von über 75 bis 85 nm;
ein $TiO_2$-Gehalt von 77,5 - 88 Gew.-% bei einer mittleren $TiO_2$-Schichtdicke von über 85 bis 95 nm;
ein $TiO_2$-Gehalt von 79 - 89 Gew.-% bei einer mittleren $TiO_2$-Schichtdicke von über 95 bis 105 nm;

ein TiO$_2$-Gehalt von 80,5 - 90 Gew.-% bei einer mittleren TiO$_2$-Schichtdicke von über 105 bis 115 nm;
ein TiO$_2$-Gehalt von 82 - 91 Gew.-% bei einer mittleren TiO$_2$-Schichtdicke von über 115 bis 125 nm;
ein TiO$_2$-Gehalt von 83 - 92 Gew.-% bei einer mittleren TiO$_2$-Schichtdicke von über 125 bis 135 nm;
ein TiO$_2$-Gehalt von 84,5 - 92,5 Gew.-% bei einer mittleren TiO$_2$-Schichtdicke von über 135 bis 145 nm;
ein TiO$_2$-Gehalt von 85,5 - 93 Gew.-% bei einer mittleren TiO$_2$-Schichtdicke von über 145 bis 155 nm;
ein TiO$_2$-Gehalt von 86,5 - 93 Gew.-% bei einer mittleren TiO$_2$-Schichtdicke von über 1'55 bis 165 nm;
ein TiO$_2$-Gehalt von 87 - 93,5 Gew.-% bei einer mittleren TiO$_2$-Schichtdicke von über 165 bis 175 nm;
ein TiO$_2$-Gehalt von 88 - 94 Gew.-% bei einer mittleren TiO$_2$-Schichtdicke von über 175 bis 185 nm;
ein TiO$_2$-Gehalt von 88,5 - 94 Gew.-% bei einer mittleren TiO$_2$-Schichtdicke von über 185 bis 195 nm;
ein TiO$_2$-Gehalt von 89 - 94,5 Gew.-% bei einer mittleren TiO$_2$-Schichtdicke von über 195 bis 205 nm;
ein TiO$_2$-Gehalt von 89,5 - 95 Gew.-% bei einer mittleren TiO$_2$-Schichtdicke von über 205 bis 215 nm.

10. Perlglanzpigmente nach einem der vorstehenden Ansprüche,
**dadurch gekennzeichnet;**
**dass** die Perlglanzpigmente mindestens eine weitere Schicht mit einem Brechungsindex < 2,0 aufweisen.

11. Perlglanzpigmente nach einem der vorstehenden Ansprüche,
**dadurch gekennzeichnet;**
**dass** die Perlglanzpigmente auf der optisch wirksamen Schicht, vorzugsweise hochbrechenden, Schicht mindestens eine weitere Schutzschicht aufweisen.

12. Perlglanzpigmente nach Anspruch 11,
**dadurch gekennzeichnet;**
**dass** die mindestens eine weitere Schutzschicht mindestens eine Metalloxidschicht, deren Metalloxide aus der Gruppe, die aus SiO$_2$, Al$_2$O$_3$, Cer-oxid und Mischungen davon und Kombinationen davon, besteht, ausgewählt werden, umfasst

13. Verfahren zur Herstellung der Perlglanzpigmente nach einem der Ansprüche 1 bis 12.
**dadurch gekennzeichnet,**
**dass** es folgende Schritte umfasst:

a) Klassieren des weitgehend transparenten Substrates unter Erhalt eines Substrates mit einer mittleren Höhe h$_s$ von 40 bis unter 100 nm.
b) Beschichten des klassierten Substrates mit einer optisch wirksamen, vorzugsweise hochbrechenden, Schicht unter Erhalt eines Perlglanzpigmentes mit einer mittleren Größe d$_{50}$ von 3 bis 8 μm.

14. Verwendung eines der Perlglanzpigmente nach einem der Ansprüchen 1 bis 12 in Lacken, Druckfarben, Kosmetika, Kunststoffen, Glas, Email oder Keramik.

15. Verwendung nach Anspruch 14,
**dadurch gekennzeichnet,**
**dass** die Kosmetika aus der Gruppe, die aus Abdeckstiften, Körperpuder. Gesichtspuder, gepresstem und losem Puder, Gesichtsmakeup, Pudercreme, Crememakeup, Emulsionsmakeup, Wachsmakeup, Foundation, Moussemakeup, Wangenrouge, Augenmakeup wie Lidschatten, Mascara, Eyelinem, flüssigen Eyelinern, Augenbrauenstiften, Lippenpflegestiften, Lippenstiften, Lip Gloss, Lip Linern, Haarstylingkompositionen wie Haarspray, Haarfestiger, Haarmousse, Haargel, Haarwachs, Haarmascara, permanenten und semi-permanenten Haarfarben, temporären Haarfarben, Hautpflegekompositionen wie Lotions, Gele, Emulsionen sowie Nagellackkompositionen besteht, ausgewählt wird.

16. Verwendung eines der Perlglanzpigmente nach einem der Ansprüchen 1 bis 12 als Softfokus Pigment.

17. Beschichtungsmittel, insbesondere kosmetisches Präparat enthaltend eines der Perlgfanzpigmente nach einem der Ansprüche 1 bis 12.

**Claims**

1. Pearlescent pigments comprising a largely transparent platelet-shaped substrate having a density ρ$_s$ and at least

one optically active coating having a density $\rho_M$,
**characterised in that**:

the transparent platelet-shaped substrate is selected from the group comprising mica, synthetic mica, $SiO_2$ platelets, $Al_2O_3$ platelets and mixtures thereof, and the substrate has an average size $d_{50}$ of 3 to 8 $\mu$m and an average height $h_s$ of 40 to 110 nm, and the standard deviation in the height $h_s$ is 25 to 80 %.

2. Pearlescent pigments as claimed in claim 1,
**characterised in that**:

**in that** the average height $h_s$ is 40 nm to less than 100 nm.

3. Pearlescent pigments as claimed in any of the preceding claims,
**characterised in that**:

the pearlescent pigments have a size distribution with a $d_{90}$ value of 7.0 to 11.0 $\mu$m.

4. Pearlescent pigments as claimed in any of the preceding claims,
**characterised in that**:

the optically active coating is a high-index coating, preferably having a refractive index $n_M > 2.0$.

5. Pearlescent pigments as claimed in any of the preceding claims,
**characterised in that**:

**in that** the optically active layer has or is a metal oxide layer and/or a metal hydroxide layer and/or a metal oxide hydrate layer.

6. Pearlescent pigments as claimed in claim 5,
**characterised in that**:

the metal oxide layer comprises or consists of metal oxides selected from the group consisting of titanium oxide, iron oxide, cerium oxide, chromium oxide, tin oxide, zirconium oxide, cobalt oxide, and mixtures thereof.

7. Pearlescent pigments as claimed in claim 5 or 6,
**characterised in that**:

the layer thickness of the metal oxide layer is between 10 and 300 nm.

8. Pearlescent pigments as claimed in one of claims 6 or 7,
**characterised in that**:

the metal oxide layer consists of $TiO_2$, preferably largely in the rutile modification, and the substrate consists of mica, and the relationship between the $TiO_2$ content in % by weight, based on the total weight of $TiO_2$ and mica, and the average layer thickness of the $TiO_2$ coating is preferably as follows:

a $TiO_2$ content of 47.5 - 62 % by weight with an average $TiO_2$ layer thickness of above 20 to 30 nm;
a $TiO_2$ content of 58 - 74 % by weight with an average $TiO_2$ layer thickness of above 35 to 45 nm;
a $TiO_2$ content of 63 - 78 % by weight with an average $TiO_2$ layer thickness of above 45 to 55 nm;
a $TiO_2$ content of 67 - 82 % by weight with an average $TiO_2$ layer thickness of above 55 to 65 nm;
a $TiO_2$ content of 70 - 85 % by weight with an average $TiO_2$ layer thickness of above 65 to 75 nm;
a $TiO_2$ content of 73.5 - 86.5 % by weight with an average $TiO_2$ layer thickness of above 75 to 85 nm;
a $TiO_2$ content of 75 - 88 % by weight with an average $TiO_2$ layer thickness of above 85 to 95 nm;
a $TiO_2$ content of 76.5 - 89 % by weight with an average $TiO_2$ layer thickness of above 95 to 105 nm;
a $TiO_2$ content of 78.5 - 90 % by weight with an average $TiO_2$ layer thickness of above 105 to 115 nm;
a $TiO_2$ content of 80 - 91 % by weight with an average $TiO_2$ layer thickness of above 115 to 125 nm;
a $TiO_2$ content of 81.5 - 92 % by weight with an average $TiO_2$ layer thickness of above 125 to 135 nm;
a $TiO_2$ content of 83 - 92.5 % by weight with an average $TiO_2$ layer thickness of above 135 to 145 nm;

a $TiO_2$ content of 84 - 93 % by weight with an average $TiO_2$ layer thickness of above 145 to 155 nm;
a $TiO_2$ content of 85 - 93 % by weight with an average $TiO_2$ layer thickness of above 155 to 165 nm;
a $TiO_2$ content of 86 - 93.5 % by weight with an average $TiO_2$ layer thickness of above 165 to 175 nm;
a $TiO_2$ content of 87 - 94 % by weight with an average $TiO_2$ layer thickness of above 175 to 185 nm;
a $TiO_2$ content of 87.5 - 94 % by weight with an average $TiO_2$ layer thickness of above 185 to 195 nm;
a $TiO_2$ content of 88 - 94.5 % by weight with an average $TiO_2$ layer thickness of above 195 to 205 nm;
a $TiO_2$ content of 89 - 95 % by weight with an average $TiO_2$ layer thickness of above 205 to 215 nm.

9. Pearlescent pigments as claimed in one of claims 6 or 8,
   **characterised in that**:

   the metal oxide layer consists of $TiO_2$ largely in the rutile modification, and the substrate consists of mica, and the relationship between the $TiO_2$ content in % by weight, based on the total weight of $TiO_2$ and mica, and the average layer thickness of the $TiO_2$ coating is preferably as follows:

   a $TiO_2$ content of 50.5 - 62 % by weight with an average $TiO_2$ layer thickness of above 20 to 30 nm;
   a $TiO_2$ content of 61 - 74 % by weight with an average $TiO_2$ layer thickness of above 35 to 45 nm;
   a $TiO_2$ content of 65.5 - 78 % by weight with an average $TiO_2$ layer thickness of above 45 to 55 nm;
   a $TiO_2$ content of 69.5 - 82 % by weight with an average $TiO_2$ layer thickness of above 55 to 65 nm;
   a $TiO_2$ content of 72.5 - 85 % by weight with an average $TiO_2$ layer thickness of above 65 to 75 nm;
   a $TiO_2$ content of 75 - 86.5 % by weight with an average $TiO_2$ layer thickness of above 75 to 85 nm;
   a $TiO_2$ content of 77.5 - 88 % by weight with an average $TiO_2$ layer thickness of above 85 to 95 nm;
   a $TiO_2$ content of 79 - 89 % by weight with an average $TiO_2$ layer thickness of above 95 to 105 nm;
   a $TiO_2$ content of 80.5 - 90 % by weight with an average $TiO_2$ layer thickness of above 105 to 115 nm;
   a $TiO_2$ content of 82 - 91 % by weight with an average $TiO_2$ layer thickness of above 115 to 125 nm;
   a $TiO_2$ content of 83 - 92 % by weight with an average $TiO_2$ layer thickness of above 125 to 135 nm;
   a $TiO_2$ content of 84.5 - 92.5 % by weight with an average $TiO_2$ layer thickness of above 135 to 145 nm;
   a $TiO_2$ content of 85.5 - 93 % by weight with an average $TiO_2$ layer thickness of above 145 to 155 nm;
   a $TiO_2$ content of 86.5 - 93 % by weight with an average $TiO_2$ layer thickness of above 155 to 165 nm;
   a $TiO_2$ content of 87 - 93.5 % by weight with an average $TiO_2$ layer thickness of above 165 to 175 nm;
   a $TiO_2$ content of 88 - 94 % by weight with an average $TiO_2$ layer thickness of above 175 to 185 nm;
   a $TiO_2$ content of 88.5 - 94 % by weight with an average $TiO_2$ layer thickness of above 185 to 195 nm;
   a $TiO_2$ content of 89 - 94.5 % by weight with an average $TiO_2$ layer thickness of above 195 to 205 nm;
   a $TiO_2$ content of 89.5 - 95 % by weight with an average $TiO_2$ layer thickness of above 205 to 215 nm.

10. Pearlescent pigments as claimed in any of the preceding claims,
    **characterised in that**:

    the pearlescent pigments have at least one further layer having a refractive index < 2.0.

11. Pearlescent pigments as claimed in of any of the preceding claims,
    **characterised in that**:

    the pearlescent pigments have at least one further protective layer on the optically active layer, preferably high-index layer.

12. Pearlescent pigments as claimed in claim 11,
    **characterised in that**:

    the at least one further protective layer comprises at least one metal oxide layer whose metal oxides are selected from the group consisting of $SiO_2$, $Al_2O_3$, cerium oxide, and mixtures thereof and combinations thereof.

13. Method for producing the pearlescent pigments as claimed in any of claims 1 to 12,
    **characterised in that**
    it comprises the following steps:

    a) classifying the largely transparent substrate, to give a substrate having an average height $h_s$ of 40 to less than 100 nm.

b) coating the classified substrate with an optically active, preferably high-index, layer, to give a pearlescent pigment having an average size $d_{50}$ of 3 to 8 µm.

14. Use of one of the pearlescent pigments as claimed in any of claims 1 to 12 in paints, printing inks, cosmetics, plastics, glass, enamel or ceramic.

15. Use as claimed in claim 14,
**characterised in that**
the cosmetics are selected from the group consisting of concealer sticks, body powder, face powder, compact and loose powder, face makeup, powder cream, cream makeup, emulsion makeup, wax makeup, foundation, mousse makeup, blusher, eye makeup such as eye shadow, mascara, eyeliners, liquid eyeliners, eyebrow pencils, lipcare sticks, lipsticks, lip gloss, lip liners, hair-styling compositions such as hair spray, hair-setting products, hair mousse, hair gel, hair wax, hair mascara, permanent and semipermanent hair colours, temporary hair colours, skincare compositions such as lotions, gels, and emulsions, and nail varnish compositions.

16. Use of one of the pearlescent pigments as claimed in any of claims 1 to 12 as a soft-focus pigment.

17. Coating composition, more particularly a cosmetic product, comprising one of the pearlescent pigments as claimed in any of claims 1 to 12.

**Revendications**

1. Pigments nacrés comprenant un substrat lamellaire sensiblement transparent ayant une masse volumique $\rho_s$, et au moins un revêtement optiquement actif ayant une masse volumique $\rho_M$, **caractérisés en ce que** le substrat lamellaire transparent est choisi dans le groupe consistant en le mica, le mica synthétique, les lamelles de $SiO_2$, les lamelles d'$Al_2O_3$ et les mélanges de ceux-ci, et le substrat présente une granulométrie moyenne $d_{50}$ de 3 à 8 µm et une hauteur moyenne $h_s$ de 40 à 110 nm, l'écart-type de la hauteur $h_s$ étant de 25 à 80 %.

2. Pigments nacrés selon la revendication 1, **caractérisés en ce que** la hauteur moyenne $h_s$ est de 40 nm à moins de 100 nm.

3. Pigments nacrés selon l'une des revendications précédentes, **caractérisés en ce que** les pigments nacrés présentent une distribution granulométrique ayant une valeur $d_{90}$ de 7,0 à 11,0 µm.

4. Pigments nacrés selon l'une des revendications précédentes, **caractérisés en ce que** le revêtement optiquement actif est un revêtement à haut indice de réfraction, et ayant de préférence un indice de réfraction $n_M > 2,0$.

5. Pigments nacrés selon l'une des revendications précédentes, **caractérisés en ce que** la couche optiquement active comprend ou est une couche d'oxyde métallique et/ou une couche d'hydroxyde métallique et/ou une couche d'oxyhydroxyde métallique.

6. Pigments nacrés selon la revendication 5, **caractérisés en ce que** la couche d'oxyde métallique contient des oxydes métalliques qui sont choisis dans le groupe consistant en l'oxyde de titane, l'oxyde de fer, l'oxyde de cérium, l'oxyde de chrome, l'oxyde d'étain, l'oxyde de zirconium, l'oxyde de cobalt et les mélanges de ceux-ci, ou en est constituée.

7. Pigments nacrés selon la revendication 5 ou 6, **caractérisés en ce que** l'épaisseur de couche de la couche d'oxyde métallique est comprise entre 10 et 300 nm.

8. Pigments nacrés selon l'une des revendications 6 ou 7, **caractérisés en ce que** la couche d'oxyde métallique est constituée de $TiO_2$, de préférence essentiellement selon la forme rutile, et le substrat est constitué de mica, et que de préférence il existe la relation suivante entre la teneur en $TiO_2$, en % en poids, par rapport au poids total du $TiO_2$ et du mica, et l'épaisseur moyenne de couche du revêtement de $TiO_2$ :

une teneur en $TiO_2$ de 47,5 - 62 % en poids pour une épaisseur moyenne de la couche de $TiO_2$ supérieure à 20 et allant jusqu'à 30 nm ;
une teneur en $TiO_2$ de 58 - 74 % en poids pour une épaisseur moyenne de la couche de $TiO_2$ supérieure à 35 et allant jusqu'à 45 nm ;

une teneur en $TiO_2$ de 63 - 78 % en poids pour une épaisseur moyenne de la couche de $TiO_2$ supérieure à 45 et allant jusqu'à 55 nm ;

une teneur en $TiO_2$ de 67 - 82 % en poids pour une épaisseur moyenne de la couche de $TiO_2$ supérieure à 55 et allant jusqu'à 65 nm ;

une teneur en $TiO_2$ de 70 - 85 % en poids pour une épaisseur moyenne de la couche de $TiO_2$ supérieure à 65 et allant jusqu'à 75 nm ;

une teneur en $TiO_2$ de 73,5 - 86,5 % en poids pour une épaisseur moyenne de la couche de $TiO_2$ supérieure à 75 et allant jusqu'à 85 nm ;

une teneur en $TiO_2$ de 75 - 88 % en poids pour une épaisseur moyenne de la couche de $TiO_2$ supérieure à 85 et allant jusqu'à 95 nm ;

une teneur en $TiO_2$ de 76,5 - 89 % en poids pour une épaisseur moyenne de la couche de $TiO_2$ supérieure à 95 et allant jusqu'à 105 nm ;

une teneur en $TiO_2$ de 78,5 - 90 % en poids pour une épaisseur moyenne de la couche de $TiO_2$ supérieure à 105 et allant jusqu'à 115 nm ;

une teneur en $TiO_2$ de 80 - 91 % en poids pour une épaisseur moyenne de la couche de $TiO_2$ supérieure à 115 et allant jusqu'à 125 nm ;

une teneur en $TiO_2$ de 81,5 - 92 % en poids pour une épaisseur moyenne de la couche de $TiO_2$ supérieure à 125 et allant jusqu'à 135 nm ;

une teneur en $TiO_2$ de 83 - 92,5 % en poids pour une épaisseur moyenne de la couche de $TiO_2$ supérieure à 135 et allant jusqu'à 145 nm ;

une teneur en $TiO_2$ de 84 - 93 % en poids pour une épaisseur moyenne de la couche de $TiO_2$ supérieure à 145 et allant jusqu'à 155 nm ;

une teneur en $TiO_2$ de 85 - 93 % en poids pour une épaisseur moyenne de la couche de $TiO_2$ supérieure à 155 et allant jusqu'à 165 nm ;

une teneur en $TiO_2$ de 86 - 93,5 % en poids pour une épaisseur moyenne de la couche de $TiO_2$ supérieure à 165 et allant jusqu'à 175 nm ;

une teneur en $TiO_2$ de 87 - 94 % en poids pour une épaisseur moyenne de la couche de $TiO_2$ supérieure à 175 et allant jusqu'à 185 nm ;

une teneur en $TiO_2$ de 87,5 - 94 % en poids pour une épaisseur moyenne de la couche de $TiO_2$ supérieure à 185 et allant jusqu'à 195 nm ;

une teneur en $TiO_2$ de 88 - 94,5 % en poids pour une épaisseur moyenne de la couche de $TiO_2$ supérieure à 195 et allant jusqu'à 205 nm ;

une teneur en $TiO_2$ de 89 - 95 % en poids pour une épaisseur moyenne de la couche de $TiO_2$ supérieure à 205 et allant jusqu'à 215 nm.

9. Pigments nacrés selon l'une des revendications 6 ou 8, **caractérisés en ce que** la couche d'oxyde métallique est constituée de $TiO_2$, de préférence essentiellement selon la forme rutile, et le substrat est constitué de mica, et que de préférence il existe la relation suivante entre la teneur en $TiO_2$, en % en poids, par rapport au poids total du $TiO_2$ et du mica, et l'épaisseur moyenne de couche du revêtement de $TiO_2$ :

une teneur en $TiO_2$ de 50,5 - 62 % en poids pour une épaisseur moyenne de la couche de $TiO_2$ supérieure à 20 et allant jusqu'à 30 nm ;

une teneur en $TiO_2$ de 61 - 74 % en poids pour une épaisseur moyenne de la couche de $TiO_2$ supérieure à 35 et allant jusqu'à 45 nm ;

une teneur en $TiO_2$ de 65,5 - 78 % en poids pour une épaisseur moyenne de la couche de $TiO_2$ supérieure à 45 et allant jusqu'à 55 nm ;

une teneur en $TiO_2$ de 69,5 - 82 % en poids pour une épaisseur moyenne de la couche de $TiO_2$ supérieure à 55 et allant jusqu'à 65 nm ;

une teneur en $TiO_2$ de 72,5 - 85 % en poids pour une épaisseur moyenne de la couche de $TiO_2$ supérieure à 65 et allant jusqu'à 75 nm ;

une teneur en $TiO_2$ de 75 - 86,5 % en poids pour une épaisseur moyenne de la couche de $TiO_2$ supérieure à 75 et allant jusqu'à 85 nm ;

une teneur en $TiO_2$ de 77,5 - 88 % en poids pour une épaisseur moyenne de la couche de $TiO_2$ supérieure à 85 et allant jusqu'à 95 nm ;

une teneur en $TiO_2$ de 79 - 89 % en poids pour une épaisseur moyenne de la couche de $TiO_2$ supérieure à 95 et allant jusqu'à 105 nm ;

une teneur en $TiO_2$ de 80,5 - 90 % en poids pour une épaisseur moyenne de la couche de $TiO_2$ supérieure à 105 et allant jusqu'à 115 nm ;

une teneur en $TiO_2$ de 82 - 91 % en poids pour une épaisseur moyenne de la couche de $TiO_2$ supérieure à 115 et allant jusqu'à 125 nm ;

une teneur en $TiO_2$ de 83 - 92 % en poids pour une épaisseur moyenne de la couche de $TiO_2$ supérieure à 125 et allant jusqu'à 135 nm ;

une teneur en $TiO_2$ de 84,5 - 92,5 % en poids pour une épaisseur moyenne de la couche de $TiO_2$ supérieure à 135 et allant jusqu'à 145 nm ;

une teneur en $TiO_2$ de 85,5 - 93 % en poids pour une épaisseur moyenne de la couche de $TiO_2$ supérieure à 145 et allant jusqu'à 155 nm ;

une teneur en $TiO_2$ de 86,5 - 93 % en poids pour une épaisseur moyenne de la couche de $TiO_2$ supérieure à 155 et allant jusqu'à 165 nm ;

une teneur en $TiO_2$ de 87 - 93,5 % en poids pour une épaisseur moyenne de la couche de $TiO_2$ supérieure à 165 et allant jusqu'à 175 nm ;

une teneur en $TiO_2$ de 88 - 94 % en poids pour une épaisseur moyenne de la couche de $TiO_2$ supérieure à 175 et allant jusqu'à 185 nm ;

une teneur en $TiO_2$ de 88,5 - 94 % en poids pour une épaisseur moyenne de la couche de $TiO_2$ supérieure à 185 et allant jusqu'à 195 nm ;

une teneur en $TiO_2$ de 89 - 94,5 % en poids pour une épaisseur moyenne de la couche de $TiO_2$ supérieure à 195 et allant jusqu'à 205 nm ;

une teneur en $TiO_2$ de 89,5 - 95 % en poids pour une épaisseur moyenne de la couche de $TiO_2$ supérieure à 205 et allant jusqu'à 215 nm.

**10.** Pigments nacrés selon l'une des revendications précédentes, **caractérisés en ce que** les pigments nacrés présentent au moins une couche supplémentaire ayant un indice de réfraction < 2,0.

**11.** Pigments nacrés selon l'une des revendications précédentes, **caractérisés en ce que** les pigments nacrés présentent, sur la couche optiquement active, de préférence sur la couche à haut indice de réfraction, au moins une couche de protection supplémentaire.

**12.** Pigments nacrés selon la revendication 11, **caractérisés en ce que** la ou les couches de protection supplémentaires comprennent au moins une couche d'oxyde métallique, dont les oxydes métalliques sont choisis dans le groupe consistant en $SiO_2$, $Al_2O_3$, l'oxyde de cérium et les mélanges de ceux-ci et les combinaisons de ceux-ci.

**13.** Procédé de fabrication de pigments nacrés selon l'une des revendications 1 à 12, **caractérisé en ce qu'**il comprend les étapes suivantes :

a) classification du substrat sensiblement transparent, avec obtention d'un substrat ayant une hauteur moyenne $h_s$ de 40 à moins de 100 nm,
b) application, sur le substrat classifié, d'une couche optiquement active, ayant de préférence un grand indice de réfraction, avec obtention d'un pigment nacré ayant une granulométrie moyenne $d_{50}$ de 3 à 8 $\mu$m.

**14.** Utilisation de l'un des pigments nacrés selon l'une des revendications 1 à 12 dans des vernis, des encres d'imprimerie, des produits cosmétiques, des matières plastiques, du verre, de l'émail ou de la céramique.

**15.** Utilisation selon la revendication 14, **caractérisée en ce que** les produits cosmétiques sont choisis dans le groupe consistant en les bâtons anti-cernes, les poudres pour le corps, les poudres pour le visage, les poudres compactes et libres, les produits pour le maquillage du visage, les crèmes-poudres, les maquillages en crème, les maquilles en émulsion, les maquilles en cire, les fonds de teint, les maquillages en mousse, le rouge à joues, les produits pour le maquillage des yeux tels que les fards à paupières, le mascara, les contours des yeux, les contours des yeux liquides, les crayons à sourcils, les pommades pour les lèvres, les bâtons à lèvres, les brillants à lèvres, les contours des lèvres, les compositions coiffantes telles que les laques à cheveux, les fixatifs pour cheveux, les mousses pour cheveux, les gels pour cheveux, les cires pour cheveux, le mascara pour cheveux, les colorants permanents et semi-permanents, les colorants temporaires, les compositions pour les soins de la peau telles que les lotions, les gels, les émulsions, ainsi que les compositions de vernis à ongles.

**16.** Utilisation de l'un des pigments nacrés selon l'une des revendications 1 à 12 en tant que pigments flouteurs.

**17.** Produit de revêtement, en particulier préparation cosmétique, contenant l'un des pigments nacrés selon l'une des revendications 1 à 12.

$$V_1 = 2\,\pi\,r_S^2\,d_M$$

$$V_2 = 4/3\,\pi\,d_M^3 + \pi^2\,d_M^2\,r_S$$

$$V_3 = \pi\,d_M^2\,h_S + 2\pi\,r_S\,d_M\,h_S$$

Substrat

Beschichtung

$d_M$

$r_S$

$h_S$

**Abb. 1: Substrat S und Beschichtung M**

**Abb. 2: Experimentelle Ergebnisse und "Fitkurven" Serien**

EP 2 123 721 B1

Abb. 3a

Abb. 3b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2007054379 A1
- EP 1595921 A1
- WO 02090448 A2
- EP 1564261 A1
- EP 1072651 A1
- EP 1727864 A1
- EP 1682622 A1
- WO 2004087816 A2

**In der Beschreibung aufgeführte Nicht-Patentliteratur**

- **C. SCHMIDT ; M. FRITZ.** Optical Physics of Synthetic Interference Pigments. *Kontakte,* 1992, 15-24